(19) Europäisches Patentamt / European Patent Office / Office européen des brevets

(11) **EP 4 783 617 A1**

(12) **EUROPEAN PATENT APPLICATION**
published in accordance with Art. 153(4) EPC

(43) Date of publication:
29.07.2026 Bulletin 2026/31

(21) Application number: 24881581.3

(22) Date of filing: 22.10.2024

(51) International Patent Classification (IPC):
*H04W 4/02* (2018.01)

(52) Cooperative Patent Classification (CPC):
H04B 7/06; H04W 4/02

(86) International application number:
PCT/CN2024/126325

(87) International publication number:
WO 2025/087216 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 24.10.2023 CN 202311390334
05.01.2024 CN 202410029547

(71) Applicant: HUAWEI TECHNOLOGIES CO., LTD.
Shenzhen 518129 (CN)

(72) Inventors:
• QIAN, Bin
Shenzhen, Guangdong 518129 (CN)
• HUANG, Lei
Shenzhen, Guangdong 518129 (CN)
• CHITRAKAR, Rojan
Shenzhen, Guangdong 518129 (CN)
• YANG, Xun
Shenzhen, Guangdong 518129 (CN)

(74) Representative: Huawei European IPR
Huawei Technologies Duesseldorf GmbH
Riesstraße 25
80992 München (DE)

(54) **SENSING MEASUREMENT METHOD, APPARATUS AND DEVICE, AND STORAGE MEDIUM**

(57) This application provides a sensing measurement method, an apparatus, a device, and a storage medium that support an IEEE Wi-Fi protocol, for example, an IEEE 802.11be/Wi-Fi 7/EHT protocol, an IEEE 802.11bn/UHR/Wi-Fi 8 protocol, an IEEE 802.15/UWB protocol, or an IEEE 802.11bf/sensing/sensing protocol. The method may be applied to an initiator of sensing measurement, for example, a first communication apparatus. The method includes: The first communication apparatus receives first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information; and processes the sensing feedback information based on the first compression indication information, to compress the part or all of the sensing feedback information, so as to implement compression transmission of the sensing feedback information.

200

First communication apparatus

Second communication apparatus

S210: Generate first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information

S220: Send the first compression indication information

S230: Send the sensing feedback information based on the first compression indication information

FIG. 2

## Description

This application claims priorities to Chinese Patent Application No. 202311390334.X, filed with the China National Intellectual Property Administration on October 24, 2023 and entitled "SENSING MEASUREMENT METHOD, APPARATUS, DEVICE, AND STORAGE MEDIUM", and to Chinese Patent Application No. 202410029547.8, filed with the China National Intellectual Property Administration on January 5, 2024 and entitled "SENSING MEASUREMENT METHOD, APPARATUS, DEVICE, AND STORAGE MEDIUM", both of which are incorporated herein by reference in their entireties.

## TECHNICAL FIELD

This application relates to the field of communication technologies, and in particular, to a sensing measurement method, an apparatus, a device, and a storage medium.

## BACKGROUND

An ultra-wideband (ultra-wideband, UWB) technology is a wireless carrier communication technology in which a nanosecond-level non-sinusoidal narrow pulse is used for data transmission. Therefore, the ultra-wideband occupies a wide spectrum range. Due to a narrow pulse and an extremely low radiation spectral density of the ultra-wideband, a UWB system has advantages such as a strong multipath resolution capability, low power consumption, and high confidentiality. Therefore, in some communication systems, the pulse of the UWB may be used for sensing measurement. An initiator (that is, a transmit end of a UWB signal) obtains information related to a target through sensing feedback information sent by a responder (that is, a receive end of a UWB echo signal).

Because a data amount of the sensing feedback information sent by the responder during sensing measurement is generally large, the sensing feedback information may be compressed, to reduce transmission resource overheads. Therefore, how to implement compression transmission of the sensing feedback information is an urgent problem to be resolved currently.

## SUMMARY

Embodiments of this application provide a sensing measurement method, an apparatus, a device, and a storage medium, to implement compression transmission of sensing feedback information.

According to a first aspect, an embodiment of this application provides a sensing measurement method. The method may be performed by a first communication apparatus. The first communication apparatus may be an initiator of sensing measurement. The first communication apparatus may be implemented as a communication device in a wireless network, or a component in a communication device, for example, a chip, a chip system, or another functional module that can invoke a program and execute the program.

In a first implementation of the first aspect, the method includes: The first communication apparatus receives first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information; and processes the sensing feedback information based on the first compression indication information, to compress the part or all of the sensing feedback information, so as to implement compression transmission of the sensing feedback information.

For example, the sensing feedback information may include a channel impulse response (channel impulse response, CIR) report (report) information element (information element, IE), and the part that is of the sensing feedback information and that is compressed according to the agreement in the protocol may include a receive report(s) (receive report(s)) field in the CIR report IE, or a CIR taps field in a receive report(s) field in the CIR report IE. The receive report(s) field in the CIR report IE in the sensing feedback information, or the CIR taps (taps) field in the receive report(s) field in the CIR report IE can resolve a problem that a large amount of feedback data occupies a large number of transmission resources due to a large number of taps in the sensing feedback information.

For example, when the part of the sensing feedback information includes the receive report(s) (receive report(s)) field in the CIR report IE, a compression manner of the receive report(s) field is agreed on in the protocol, to resolve a problem that a large amount of feedback data occupies a large number of transmission resources due to a large number of taps in the sensing feedback information.

For example, the compression manner of the receive report(s) field includes: compressing the receive report(s) field as a whole; or compressing each receive report in the receive report(s) field.

For example, the CIR report IE is included in a plurality of data units, and the compression manner of the receive report(s) field includes: compressing a receive report(s) field in each data unit as a whole.

For example, when the sensing feedback information includes a processed target feature (processed target feature) IE, the part that is of the sensing feedback information and that is compressed according to the agreement in the protocol may include a full information target feedback content (full target list) field and/or a sparse information target feedback content (sparse target list) field in the processed target feature IE, to resolve a problem that a large data amount of the target feature occupies a large number of transmission resources due to a large number of targets included in the sensing feedback information.

For example, a compression manner of the full target list field and/or the sparse target list field is agreed on in the protocol.

For example, the compression manner of the full target list field and/or the sparse target list field includes: compressing the full target list field and the sparse target list field as a whole; or compressing the full target list field, and/or compressing the sparse target list field.

For example, compressing the full target list field includes: compressing the full target list field as a whole; or compressing each full target list in the full target list field.

For example, compressing the sparse target list field includes: compressing the sparse target list field as a whole; or compressing each sparse target list in the sparse target list field.

For example, the processed target feature IE is included in a plurality of data units, and the compression manner of the full target list field and/or the sparse target list field includes: compressing a full target list field and a sparse target list field in each data unit as a whole; or compressing a full target list field in each data unit as a whole, and compressing each sparse target list field as a whole.

In the foregoing example, when the part that is of the sensing feedback information and that is compressed according to the agreement in the protocol, an uncompressed field may be used by a receive end to identify information in a transmission process, to determine whether to receive the sensing feedback information.

In a second implementation of the first aspect, the method includes: The first communication apparatus generates a second frame, where the second frame includes second compression indication information, and the second compression indication information indicates whether to compress a part or all of sensing feedback information; and sends the second frame, to compress the part or all of the sensing feedback information, so as to implement compression transmission of the sensing feedback information.

For example, the second frame further includes third compression indication information, and the third compression indication information indicates a type of the sensing feedback information. Based on the third compression indication information, the first communication apparatus may indicate the type of the sensing feedback information.

Optionally, the type of the sensing feedback information may include a CIR and/or a target feature. In other words, the third compression indication information may indicate that the sensing feedback information includes the CIR report IE and/or the processed target feature IE, or the third compression indication information may indicate to compress the CIR report IE and/or the processed target feature IE in the sensing feedback information.

For example, the type of the sensing feedback information is the CIR, the sensing feedback information includes the CIR report IE, and compressing the part of the sensing feedback information includes: compressing a receive report(s) field in the CIR report IE; or compressing a CIR taps field in a receive report(s) field in the CIR report IE; and compressing all of the sensing feedback information includes: compressing the CIR report IE.

For example, when the second compression indication information indicates to compress the receive report(s) field in the CIR report IE, a compression manner of the receive report(s) field is agreed on in a protocol.

For example, the compression manner of the receive report(s) field includes: compressing the receive report(s) field as a whole; or compressing each receive report in the receive report(s) field.

For example, the CIR report IE is included in a plurality of data units, and the compression manner of the receive report(s) field includes: compressing a receive report(s) field in each data unit as a whole.

For example, the type of the sensing feedback information is the target feature, and the sensing feedback information includes a processed target feature IE; and compressing the part of the sensing feedback information includes: compressing a full target list field and/or a sparse target list field in the processed target feature IE.

For example, a compression manner of the full target list field and/or the sparse target list field is agreed on in the protocol.

For example, the compression manner of the full target list field and/or the sparse target list field includes: compressing the full target list field and the sparse target list field as a whole; or compressing the full target list field, and/or compressing the sparse target list field.

For example, compressing the full target list field includes: compressing the full target list field as a whole; or compressing each full target list in the full target list field.

For example, compressing the sparse target list field includes: compressing the sparse target list field as a whole; or compressing each sparse target list in the sparse target list field.

For example, the processed target feature IE is included in a plurality of data units, and the compression manner of the full target list field and/or the sparse target list field includes: compressing a full target list field and a sparse target list field in each data unit as a whole; or compressing a full target list field in each data unit as a whole, and compressing each sparse target list field as a whole.

For beneficial effect of compressing different content in the sensing feedback information, refer to descriptions of the corresponding compressed content in the first implementation. A difference lies in that the compressed content is indicated based on the second compression indication information to implement flexible control on compression transmission.

In a third implementation of the first aspect, the first communication apparatus receives fourth compression indication information, where the fourth compression indication information indicates whether to compress a part or all of fields in sensing feedback information; and processes the sensing feedback information based on the fourth compression indication information, to compress the part or all of the sensing feedback information, so as to implement compression transmission of the sensing feedback information.

For example, the sensing feedback information includes a CIR report IE, and compressing the part of the sensing feedback information includes: compressing a receive report(s) field in the CIR report IE; or compressing a CIR taps field in a receive report(s) field in the CIR report IE.

For example, the sensing feedback information includes a processed target feature IE(s), and compressing the part of the sensing feedback information includes: compressing a full target list field and/or a sparse target list field in the processed target feature IE.

For beneficial effect of compressing different content in the feedback sensing information, refer to descriptions of the corresponding compressed content in the first implementation. A difference lies in that the compressed content is indicated based on the second compression indication information to implement flexible control on compression transmission.

For example, the fourth compression indication information includes a first bitmap, where at least one bit in the first bitmap one-to-one corresponds to at least one receive report in the receive report(s) field in the CIR report IE. The bit indicates whether to compress a corresponding receive report or indicates whether to compress a CIR taps field in a corresponding receive report, to implement compression control on each receive report.

For example, the fourth compression indication information includes a second bitmap, where at least one bit in the second bitmap one-to-one corresponds to at least one piece of target feedback content in the processed target feature IE. The bit indicates whether to compress corresponding target feedback content, and the target feedback content is carried in the full target list field and/or the sparse target list field, to implement compression control on each sensed target feature.

For example, the fourth compression indication information includes an identifier of the CIR report IE in the sensing feedback information. The identifier of the CIR report IE is preconfigured, and performing compression indication on the sensing feedback information based on the identifier of the CIR report IE may save signaling overheads.

For example, the fourth compression indication information includes an identifier of the processed target feature IE in the sensing feedback information. The identifier of the processed target feature IE is preconfigured, and performing compression indication on the sensing feedback information based on the identifier of the processed target feature IE may save signaling overheads.

For example, when the fourth compression indication information indicates whether to compress the CIR taps field in the receive report(s) field in the CIR report IE in the sensing feedback information, the fourth compression indication information is carried in the CIR taps field in the receive report(s) field in the CIR report IE, to implement an indication indicating to compress a CIR taps field in each receive report.

According to a second aspect, an embodiment of this application provides a sensing measurement method. The method may be performed by a second communication apparatus. The second communication apparatus may be a responder of sensing measurement. The second communication apparatus may be implemented as a communication device in a wireless network, or a component in a communication device, for example, a chip, a chip system, or another functional module that can invoke a program and execute the program.

In a first implementation of the second aspect, the method includes: The second communication apparatus generates first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information; and sends the first compression indication information.

For example, the sensing feedback information includes a channel impulse response report information element CIR report IE, and the part of the sensing feedback information includes: a receive report(s) (receive report(s)) field in the CIR report IE; or a CIR taps (taps) field in a receive report(s) field in the CIR report IE.

For example, when the part of the sensing feedback information includes the receive report(s) (receive report(s)) field in the CIR report IE, a compression manner of the receive report(s) field is agreed on in the protocol.

For example, the compression manner of the receive report(s) field includes: compressing the receive report(s) field as a whole; or compressing each receive report in the receive report(s) field.

For example, the CIR report IE is included in a plurality of data units, and the compression manner of the receive report(s) field includes: compressing a receive report(s) field in each data unit as a whole.

For example, the sensing feedback information includes a processed target feature information element processed target feature IE, and the part of the sensing feedback information includes: a full information target feedback content (full target list) field and/or a sparse information target feedback content (sparse target list) field in the processed target feature IE.

For example, a compression manner of the full target list field and/or the sparse target list field is agreed on in the protocol.

For example, the compression manner of the full target list field and/or the sparse target list field includes: compressing the full target list field and the sparse target list field as a whole; or compressing the full target list field, and/or compressing the sparse target list field.

For example, compressing the full target list field includes: compressing the full target list field as a whole; or compressing each full target list in the full target list field.

For example, compressing the sparse target list field includes: compressing the sparse target list field as a whole; or compressing each sparse target list in the sparse target list field.

For example, the processed target feature IE is included in a plurality of data units, and the compression manner of the full target list field and/or the sparse target list field includes: compressing a full target list field and a sparse target list field in each data unit as a whole; or compressing a full target list field in each data unit as a whole, and compressing each sparse target list field as a whole.

In a second implementation of the second aspect, the method includes: The second communication apparatus receives a second frame, where the second frame includes second compression indication information, and the second compression indication information indicates whether to compress a part or all of sensing feedback information; and processes the sensing feedback information based on the second compression indication information.

For example, the second frame further includes third compression indication information, and the third compression indication information indicates a type of the sensing feedback information.

For example, the type of the sensing feedback information is a channel impulse response CIR, and the sensing feedback information includes a channel impulse response report information element CIR report IE; compressing the part of the sensing feedback information includes: compressing a receive report(s) field in the CIR report IE; or compressing a CIR taps field in a receive report(s) field in the CIR report IE; and compressing all of the sensing feedback information includes: compressing the CIR report IE.

For example, when the second compression indication information indicates to compress the receive report(s) field in the CIR report IE, a compression manner of the receive report(s) field is agreed on in a protocol.

For example, the compression manner of the receive report(s) field includes: compressing the receive report(s) field as a whole; or compressing each receive report in the receive report(s) field.

For example, the CIR report IE is included in a plurality of data units, and the compression manner of the receive report(s) field includes: compressing a receive report(s) field in each data unit as a whole.

For example, the type of the sensing feedback information is a target feature, and the sensing feedback information includes a processed target feature IE; and compressing the part of the sensing feedback information includes: compressing a full target list field and/or a sparse target list field in the processed target feature IE.

For example, a compression manner of the full target list field and/or the sparse target list field is agreed on in the protocol.

For example, the compression manner of the full target list field and/or the sparse target list field includes: compressing the full target list field and the sparse target list field as a whole; or compressing the full target list field, and/or compressing the sparse target list field.

For example, compressing the full target list field includes: compressing the full target list field as a whole; or compressing each full target list in the full target list field.

For example, compressing the sparse target list field includes: compressing the sparse target list field as a whole; or compressing each sparse target list in the sparse target list field.

For example, the processed target feature IE is included in a plurality of data units, and the compression manner of the full target list field and/or the sparse target list field includes: compressing a full target list field and a sparse target list field in each data unit as a whole; or compressing a full target list field in each data unit as a whole, and compressing each sparse target list field as a whole.

In a third implementation of the second aspect, the method includes: The second communication apparatus generates fourth compression indication information, where the fourth compression indication information indicates whether to compress a part or all of fields in sensing feedback information; and sends the fourth compression indication information.

For example, the sensing feedback information includes a CIR report IE, and compressing the part of the sensing feedback information includes: compressing a receive report(s) field in the CIR report IE; or compressing a CIR taps field in a receive report(s) field in the CIR report IE.

For example, the sensing feedback information includes a processed target feature IE(s), and compressing the part of the sensing feedback information includes: compressing a full target list field and/or a sparse target list field in the processed target feature IE.

For example, the fourth compression indication information includes a first bitmap, where at least one bit in the first bitmap one-to-one corresponds to at least one receive report in the receive report(s) field in the CIR report IE. The bit indicates whether to compress a corresponding receive report or indicates whether to compress a CIR taps field in a corresponding receive report.

For example, the fourth compression indication information includes a second bitmap, where at least one bit in the second bitmap one-to-one corresponds to at least one piece of target feedback content in the processed target feature IE. The bit indicates whether to compress corresponding target feedback content, and the target feedback content is carried in the full target list field and/or the sparse target list field.

For example, the fourth compression indication information includes an identifier of the CIR report IE in the sensing feedback information.

For example, the fourth compression indication information includes an identifier of the processed target feature IE in the sensing feedback information.

For example, when the fourth compression indication information indicates whether to compress the CIR taps field in the receive report(s) field in the CIR report IE in the sensing feedback information, the fourth compression indication information is carried in the CIR taps field in the receive report(s) field in the CIR report IE.

According to a third aspect, an embodiment of this application provides a communication apparatus. The communication apparatus may include a transceiver module and a processing module.

In a first implementation of the third aspect, the transceiver module may be configured to receive first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information; and the processing module may be configured to process the sensing feedback information based on the first compression indication information.

For example, the sensing feedback information includes a channel impulse response report information element CIR report IE, and the part of the sensing feedback information includes: a receive report(s) (receive report(s)) field in the CIR report IE; or a CIR taps field in a receive report(s) field in the CIR report IE.

For example, when the part of the sensing feedback information includes the receive report(s) (receive report(s)) field in the CIR report IE, a compression manner of the receive report(s) field is agreed on in the protocol, to resolve a problem that a large amount of feedback data occupies a large number of transmission resources due to a large number of taps in the sensing feedback information.

For example, the compression manner of the receive report(s) field includes: compressing the receive report(s) field as a whole; or compressing each receive report in the receive report(s) field.

For example, the CIR report IE is included in a plurality of data units, and the compression manner of the receive report(s) field includes: compressing a receive report(s) field in each data unit as a whole.

For example, the sensing feedback information includes a processed target feature information element processed target feature IE, and the part of the sensing feedback information includes: a full information target feedback content (full target list) field and/or a sparse information target feedback content (sparse target list) field in the processed target feature IE.

For example, a compression manner of the full target list field and/or the sparse target list field is agreed on in the protocol.

For example, the compression manner of the full target list field and/or the sparse target list field includes: compressing the full target list field and the sparse target list field as a whole; or compressing the full target list field, and/or compressing the sparse target list field.

For example, compressing the full target list field includes: compressing the full target list field as a whole; or compressing each full target list in the full target list field.

For example, compressing the sparse target list field includes: compressing the sparse target list field as a whole; or compressing each sparse target list in the sparse target list field.

For example, the processed target feature IE is included in a plurality of data units, and the compression manner of the full target list field and/or the sparse target list field includes: compressing a full target list field and a sparse target list field in each data unit as a whole; or compressing a full target list field in each data unit as a whole, and compressing each sparse target list field as a whole.

In a second implementation of the third aspect, the processing module may be configured to generate a second frame, where the second frame includes second compression indication information, and the second compression indication information indicates whether to compress a part or all of sensing feedback information; and the transceiver module may be configured to send the second frame.

For example, the second frame further includes third compression indication information, and the third compression indication information indicates a type of the sensing feedback information.

For example, the type of the sensing feedback information is a channel impulse response CIR, and the sensing feedback information includes a channel impulse response report information element CIR report IE; compressing the part of the sensing feedback information includes: compressing a receive report(s) field in the CIR report IE; or compressing a CIR taps field in a receive report(s) field in the CIR report IE; and compressing all of the sensing feedback information includes: compressing the CIR report IE.

For example, when the second compression indication information indicates to compress the receive report(s) field in the CIR report IE, a compression manner of the receive report(s) field is agreed on in a protocol.

For example, the compression manner of the receive report(s) field includes: compressing the receive report(s) field as a whole; or compressing each receive report in the receive report(s) field.

For example, the CIR report IE is included in a plurality of data units, and the compression manner of the receive report(s) field includes: compressing a receive report(s) field in each data unit as a whole.

For example, the type of the sensing feedback information is a target feature, and the sensing feedback information includes a processed target feature IE; and compressing the part of the sensing feedback information includes: compressing a full target list field and/or a sparse target list field in the processed target feature IE.

For example, a compression manner of the full target list field and/or the sparse target list field is agreed on in the protocol.

For example, the compression manner of the full target list field and/or the sparse target list field includes: compressing the full target list field and the sparse target list field as a whole; or compressing the full target list field, and/or compressing the sparse target list field.

For example, compressing the full target list field includes: compressing the full target list field as a whole; or compressing each full target list in the full target list field.

For example, compressing the sparse target list field includes: compressing the sparse target list field as a whole; or compressing each sparse target list in the sparse target list field.

For example, the processed target feature IE is included in a plurality of data units, and the compression manner of the full target list field and/or the sparse target list field includes: compressing a full target list field and a sparse target list field in each data unit as a whole; or compressing a full target list field in each data unit as a whole, and compressing each sparse target list field as a whole.

In a third implementation of the third aspect, the transceiver module may be configured to receive fourth compression indication information, where the fourth compression indication information indicates whether to compress a part or all of fields in sensing feedback information; and the processing module may be configured to process the sensing feedback information based on the fourth compression indication information.

For example, the sensing feedback information includes a CIR report IE, and compressing the part of the sensing feedback information includes: compressing a receive report(s) field in the CIR report IE; or compressing a CIR taps field in a receive report(s) field in the CIR report IE.

For example, the sensing feedback information includes a processed target feature IE(s), and compressing the part of the sensing feedback information includes: compressing a full target list field and/or a sparse target list field in the processed target feature IE.

For example, the fourth compression indication information includes a first bitmap, where at least one bit in the first bitmap one-to-one corresponds to at least one receive report in the receive report(s) field in the CIR report IE. The bit indicates whether to compress a corresponding receive report or indicates whether to compress a CIR taps field in a corresponding receive report.

For example, the fourth compression indication information includes a second bitmap, where at least one bit in the second bitmap one-to-one corresponds to at least one piece of target feedback content in the processed target feature IE. The bit indicates whether to compress corresponding target feedback content, and the target feedback content is carried in the full target list field and/or the sparse target list field.

For example, the fourth compression indication information includes an identifier of the CIR report IE in the sensing feedback information.

For example, the fourth compression indication information includes an identifier of the processed target feature IE in the sensing feedback information.

For example, when the fourth compression indication information indicates whether to compress the CIR taps field in the receive report(s) field in the CIR report IE in the sensing feedback information, the fourth compression indication information is carried in the CIR taps field in the receive report(s) field in the CIR report IE.

According to a fourth aspect, an embodiment of this application provides a communication apparatus. The communication apparatus may include a transceiver module and a processing module.

In a first implementation of the fourth aspect, the processing module may be configured to generate first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information; and the transceiver module may be configured to send the first compression indication information.

For example, the sensing feedback information includes a channel impulse response report information element CIR report IE, and the part of the sensing feedback information includes: a receive report(s) (receive report(s)) field in the CIR report IE; or a CIR taps (taps) field in a receive report(s) field in the CIR report IE.

For example, the sensing feedback information includes a processed target feature information element processed target feature IE, and the part of the sensing feedback information includes: a full information target feedback content (full target list) field and/or a sparse information target feedback content (sparse target list) field in the processed target feature IE.

In a second implementation of the fourth aspect, the transceiver module may be configured to receive a second frame, where the second frame includes second compression indication information, and the second compression indication information indicates whether to compress a part or all of sensing feedback information; and the processing module may be configured to process the sensing feedback information based on the second compression indication information.

For example, the second frame further includes third compression indication information, and the third compression indication information indicates a type of the sensing feedback information.

For example, the type of the sensing feedback information is a channel impulse response CIR, and the sensing feedback information includes a channel impulse response report information element CIR report IE; compressing the part of the sensing feedback information includes: compressing a receive report(s) field in the CIR report IE; or compressing a CIR taps field in a receive report(s) field in the CIR report IE; and compressing all of the sensing feedback information includes: compressing the CIR report IE.

For example, the type of the sensing feedback information is a target feature, and the sensing feedback information includes a processed target feature IE; and compressing the part of the sensing feedback information includes: compressing a full target list field and/or a sparse target list field in the processed target feature IE.

In a second implementation of the fourth aspect, the processing module may be configured to generate fourth compression indication information, where the fourth compression indication information indicates whether to compress a part or all of fields in sensing feedback information; and the transceiver module may be configured to send the fourth compression indication information.

For example, the sensing feedback information includes a CIR report IE, and compressing the part of the sensing feedback information includes: compressing a receive report(s) field in the CIR report IE; or compressing a CIR taps field in a receive report(s) field in the CIR report IE.

For example, the sensing feedback information includes a processed target feature IE(s), and compressing the part of the sensing feedback information includes: compressing a full target list field and/or a sparse target list field in the processed target feature IE.

For example, the fourth compression indication information includes a first bitmap, where at least one bit in the first bitmap one-to-one corresponds to at least one receive report in the receive report(s) field in the CIR report IE. The bit indicates whether to compress a corresponding receive report or indicates whether to compress a CIR taps field in a corresponding receive report.

For example, the fourth compression indication information includes a second bitmap, where at least one bit in the second bitmap one-to-one corresponds to at least one piece of target feedback content in the processed target feature IE. The bit indicates whether to compress corresponding target feedback content, and the target feedback content is carried in the full target list field and/or the sparse target list field.

For example, the fourth compression indication information includes an identifier of the CIR report IE in the sensing feedback information.

For example, the fourth compression indication information includes an identifier of the processed target feature IE in the sensing feedback information.

For example, when the fourth compression indication information indicates whether to compress the CIR taps field in the receive report(s) field in the CIR report IE in the sensing feedback information, the fourth compression indication information is carried in the CIR taps field in the receive report(s) field in the CIR report IE.

According to a fifth aspect, an embodiment of this application provides a communication apparatus, including: a processor, configured to perform the method in any one of the first aspect, the second aspect, or the possible implementations of the first aspect and the second aspect by running a computer program or by using a logic circuit.

In a possible implementation, the communication apparatus further includes a memory, and the memory is configured to store the computer program.

In a possible implementation, the communication apparatus further includes a communication interface, and the communication interface is configured to input and/or output a signal.

According to a sixth aspect, an embodiment of this application provides a chip, including a processor, configured to invoke computer instructions from a memory and run the computer instructions, so that a device in which the chip is installed performs the method in any one of the first aspect, the second aspect, or the possible implementations of the first aspect and the second aspect.

According to a seventh aspect, an embodiment of this application provides a communication system, including: a first communication apparatus, configured to perform the method in any one of the first aspect or the possible implementations of the first aspect; and a second communication apparatus, configured to perform the method in any one of the second aspect or the possible implementations of the second aspect.

According to an eighth aspect, an embodiment of this application provides a computer-readable storage medium, configured to store computer program instructions. The computer program enables a computer to perform the method in any one of the first aspect, the second aspect, or the possible implementations of the first aspect and the second aspect.

According to a ninth aspect, an embodiment of this application provides a computer program. The computer program enables a computer to perform the method in any one of the first aspect, the second aspect, or the possible implementations of the first aspect and the second aspect.

According to a tenth aspect, an embodiment of this application provides a computer program product, including computer program instructions. The computer program instructions enable a computer to perform the method in any one of the first aspect, the second aspect, or the possible implementations of the first aspect and the second aspect.

For beneficial effect of the content in the second aspect to the tenth aspect and the possible implementations, refer to the beneficial effect brought by the first aspect and the possible implementations of the first aspect. Details are not described herein again.

**BRIEF DESCRIPTION OF DRAWINGS**

FIG. 1 is a diagram of two application scenarios according to this application;
FIG. 2 is a schematic interaction flowchart of a sensing measurement method according to an embodiment of this application;
FIG. 3 is a schematic interaction flowchart of a sensing measurement method according to an embodiment of this application;
FIG. 4 is a schematic interaction flowchart of a sensing measurement method according to an embodiment of this application;
FIG. 5 is a block diagram of a communication apparatus according to an embodiment of this application; and
FIG. 6 is another block diagram of a communication apparatus according to an embodiment of this application.

**DESCRIPTION OF EMBODIMENTS**

The following describes technical solutions of this application with reference to accompanying drawings.

Embodiments of this application may be applied to a wireless personal area network (wireless personal area network, WPAN) based on a UWB technology. Currently, a standard used by the WPAN is an institute of electrical and electronics engineer (institute of electrical and electronics engineer, IEEE) 802.15 series. The WPAN may be used for communication between digital auxiliary devices in a small range, for example, a telephone, a computer, and an auxiliary device, and a working range of the WPAN is usually within 10 m. Technologies supporting the wireless personal area network include Bluetooth (Bluetooth), ZigBee (ZigBee), ultra-wideband, an IrDA infrared (infrared) connection technology, HomeRF, and the like. A person skilled in the art easily understands that aspects in this application may be extended to other networks using various standards or protocols, for example, a wireless local area network (Wireless Local Area Network, WLAN), a high-performance wireless LAN (High Performance Radio LAN, HIPERLAN), a wide area network (WAN), or another network that is known or developed later.

In the WPAN, devices may be classified into a full-function device (full-function device, FFD) and a reduced-function device (reduced-function device, RFD) based on communication capabilities of the devices. FFDs can communicate with each other and the FFD can communicate with the RFD. Generally, RFDs do not directly communicate with each other, but the RFD forwards data to the outside through one FFD, and the FFD associated with the RFD is referred to as a coordinator (coordinator) of the RFD. The RFD is mainly used for a simple control application, for example, a light switch and a passive infrared sensor, transmits a small amount of data, occupies a small number of transmission resources, and has low RFD costs. The coordinator may also be referred to as a personal area network (personal area network, PAN) coordinator, a central control node, or the like. The PAN coordinator is a main control node of an entire network, and each ad hoc network can have only one PAN coordinator having functions of member identity management, link information management, and packet forwarding. Optionally, the device in embodiments of this application may be a device that supports a plurality of WPAN standards, such as 802.15.4a, 802.15.4z, and a currently discussed version or a later version.

In embodiments of this application, the device of the WPAN may be a communication server, a router, a switch, a bridge, a computer, a mobile phone, a home smart device, a vehicle-mounted communication device, or the like.

In embodiments of this application, the device includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specially limited in embodiments of this application, provided that a program that records code of the method provided in embodiments of this application can be run to perform communication according to the method provided in embodiments of this application. For example, the method provided in embodiments of this application may be performed by the FFD or the RFD, or a functional module that is in the FFD or the RFD and that can invoke a program and execute the program.

Alternatively, embodiments of this application are further applicable to a wireless local area network system, for example, an internet of things (internet of things, IoT) network or vehicle-to-everything (Vehicle to X, V2X). Certainly, embodiments of this application may be further applicable to another possible communication system, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access, WiMAX (worldwide interoperability for microwave access, WiMAX) communication system, a 5th generation (5th generation, 5G) communication system, and a future 6th generation (6th generation, 6G) communication system.

The communication system applicable to this application is merely an example for description, and the communication system applicable to this application is not limited thereto. This is described herein once for all, and details are not described below again.

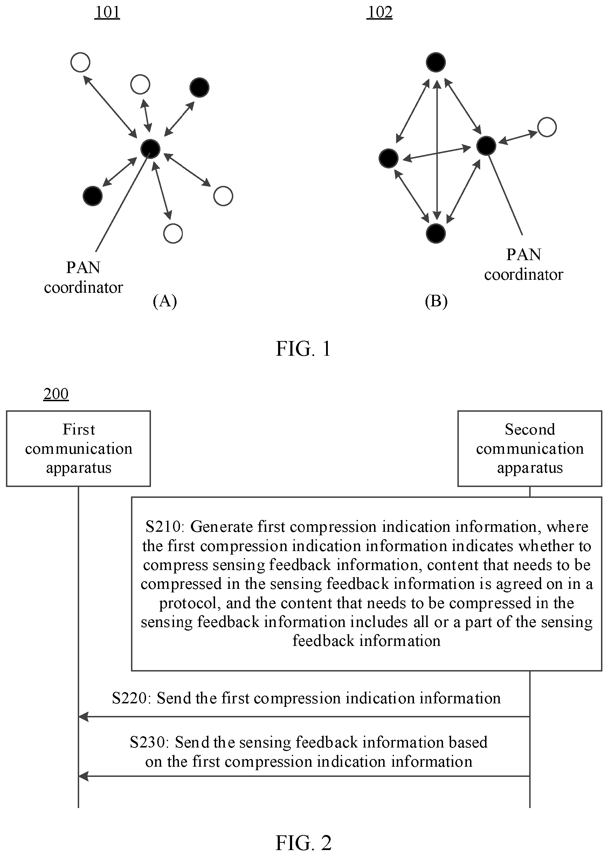

FIG. 1 is a diagram of two application scenarios according to this application. In a system 101 shown in (A) in FIG. 1, a plurality of FFDs and a plurality of RFDs form a communication system in a star topology (star topology), where one FFD is a PAN coordinator. In the communication system in the star topology, the PAN coordinator transmits data with one or more other devices (such as an FFD and/or an RFD), that is, a plurality of devices may establish a one-to-many or many-to-one data transmission architecture. In a system 102 shown in (B) in FIG. 1, a plurality of FFDs and one RFD form a communication system in a peer to peer topology (peer to peer topology), where one FFD is a PAN controller. In the communication system in the peer to peer topology, a plurality of different devices (such as an FFD and/or an RFD) may establish a many-to-many data transmission architecture.

It should be understood that (A) in FIG. 1 and (B) in FIG. 1 are merely simplified diagrams for ease of understanding, and do not constitute a limitation on an application scenario of this application. For example, the system 101 and/or the system 102 may further include more or fewer FFDs and/or more or fewer RFDs.

Sensing measurement based on the UWB technology is merely an example for description, and is not limited in this application. All sensing measurement in a wireless network is applicable to the sensing measurement method provided in this application.

For example, sensing measurement is implemented based on the UWB technology. A UWB signal sent by a sensing initiator is received by a sensing responder after the UWB signal reaches a target. Compared with the UWB signal, the signal received by the sensing responder may be referred to as a UWB echo signal, and the sensing initiator may obtain information related to the target based on sensing feedback information sent by the sensing responder. For example, the sensing initiator may continuously send a sensing packet, where the sensing packet may be a set of UWB signals within specific time, and the sensing responder may sense a target based on the sensing packet. For example, when receiving a UWB signal at specific time, the sensing responder may record a measurement parameter corresponding to the time, to obtain, through sampling, a measurement parameter corresponding to each tap in a plurality of taps (for example, taps), where the tap may be alternatively interpreted as a fast shot.

Feedback of the sensing measurement may include the following two manners: Manner 1: Feed back CIR information; and Manner 2: Feed back a target feature determined based on CIR information, for example, information like a velocity, an angle, and a range of a target. In Manner 1, the CIR information includes a plurality of taps, resulting in a large amount of feedback data. In Manner 2, there may be a plurality of targets, also resulting in a large data amount of features of the targets. Therefore, no matter which feedback manner is used, a data amount of the sensing feedback information is large, resulting in large transmission resource overheads. The sensing feedback information needs to be compressed, to reduce air interface time.

Currently, for control parameter information indicating compression for the sensing feedback information, refer to fields shown in the following Table 1.

Table 1

| Bits (bits): 0 and 1 | 2 and 3 | 4 and 5 | 6 | 7 | 8 | 9 to 18 | 19 to 23 | 24 | 25 to 31 | Octets (octets): 0/4/8/16/32 |
|---|---|---|---|---|---|---|---|---|---|---|
| CIR I/Q number of bits | bitmap mode | length | process CIR report for range | process CIR report for velocity | process CIR report for AOA measurement | bitmap offset | bitmap gap | compression | reserved | bitmap |

CIR in-phase/quadrature number of bits (CIR I/Q number of bits): indicates the number of bits occupied by an in-phase/quadrature (In-phase/Quadrature, I/Q) component of each tap when a CIR is fed back. 00 indicates 10 bits, 01 indicates 12 bits, 10 indicates 14 bits, and 11 indicates 16 bits.

Bitmap mode (bitmap mode): indicates a bitmap setting manner. 00 indicates that a bitmap set by the sensing initiator is a predefined bitmap, 01 indicates that a bitmap set by the sensing initiator is a non-predefined bitmap, 10 indicates a bitmap set by the sensing responder, and 11 indicates reserved.

Length (length): when a bitmap mode is 0, indicates a length of a sub-window, where in this case, there are two sub-windows with a same length, and a gap between the two sub-windows is specified by a bitmap gap (bitmap gap); or when a bitmap mode is 1 or 2, indicates a length of a bitmap.

Process CIR report for range (process CIR report for range): indicates whether to feed back range information, where 1 indicates feedback; or 0 indicates no feedback.

Process CIR report for velocity (process CIR report for velocity): indicates whether to feed back velocity information, where 1 indicates feedback; or 0 indicates no feedback.

Process CIR report for angle-of-arrival (angle-of-arrival, AOA) measurement (process CIR report for AOA measurement): indicates whether to feed back AOA information, where 1 indicates feedback; or 0 indicates no feedback.

Bitmap offset (bitmap offset): indicates a range (unit: tap) between a $1^{st}$ tap in a feedback window and a reference tap.

Bitmap gap: when a bitmap mode is 0, indicates a length of a gap between two sub-windows.

Compression (compression): indicates whether to compress the sensing feedback information, where 1 indicates compression; or 0 indicates no compression. Optionally, a lossless data compression algorithm (for example, deflate) may be used for compression.

Reserved: indicates a reserved bit.

Bitmap: when a bitmap mode is 1, indicates whether a tap in a feedback window needs to be fed back.

Based on the control parameter information shown in Table 1, the sensing initiator sends the control parameter information to the sensing responder to indicate the feedback of the sensing responder.

In the feedback in Manner 1, when sending the CIR information to the sensing initiator, the sensing responder may perform feedback based on CIR report IE content (content) shown in Table 2.

Table 2

| bits: 0 and 1 | 2 and 3 | 4 to 13 | 14 and 15 | 16 | 17 to 23 | octets: 4/8/16/32 | Variable (variable)$\times$ N |
|---|---|---|---|---|---|---|---|
| number of rx antennas | bitmap length | bitmap offset | number of segments | compression | reserved | CIR bitmap | receive report(s) |

Number of receive antennas (number of rx antennas): A value plus 1 indicates the number of antennas that need to be used to feed back a CIR report.

Bitmap length: is a length of a bitmap.

Bitmap offset: is an offset of a bitmap, and indicates a range (unit: tap) between a $1^{st}$ tap in a feedback window and a reference tap.

Number of segments (number of segments): A value plus 1 indicates the number of segments that need to be used to feed back a CIR report. It should be noted that, the sensing initiator may split a UWB signal into a plurality of segmented signals, and then send the segmented signals, to meet a requirement of large transmit power.

Compression: indicates whether to compress the sensing feedback information, where 1 indicates compression; or 0 indicates no compression. The Deflate method is used for compression.

CIR bitmap: is a bitmap, and indicates a tap that needs to be fed back.

Receive report (receive report): is a CIR report. A CIR report IE may include one or more receive reports, for example, may include N receive reports, where N is a positive integer. The one or more receive reports may be expressed as receive report(s). Content of the receive report is shown in the following Table 3.

Table 3

| bits: 0 to 5 | 6 to 9 | 10 to 15 | octets: 1 | variable |
|---|---|---|---|---|
| Timing offset | normalization factor | reserved | RSSI | CIR taps |

Time offset (timing offset): is an offset between a reference tap and CIR report time.

Normalization factor (normalization factor): indicates the number of left shift bits of I/Q data in binary mode.

Received signal strength indication (received signal strength indication, RSSI): indicates received signal strength.

CIR taps: indicates a measurement value of a tap, where each tap corresponds to one bit in a bitmap.

In the feedback in Manner 2, when sending the target feature to the sensing initiator, the sensing responder may perform feedback based on processed target feature IE content shown in Table 4.

Table 4

| bits: 0 to 5 | 6 | 7 | 8 to 13 | 14 to 19 | 0/Variable | 0/Variable | 0/variable |
|---|---|---|---|---|---|---|---|
| number of targets | EOL | reserved | number of full targets | number of sparse targets | CIR report | full target list | sparse target list |

Number of targets (number of targets): indicates the number of targets.

End of list (end of list, EOL): if a value is 0, indicates that target content (target list, for example, including the full information target feedback content and/or sparse information target feedback content) may appear in a next report; or if a value is 1, indicates that a current report includes all target lists.

Number of full targets: indicates the number of full information targets.

Number of sparse targets: indicates the number of sparse information targets.

CIR report: indicates tap feedback content.

Full target list: indicates full information target feedback content.

Sparse target list: indicates sparse information target feedback content.

Based on the foregoing example, in the control parameter information shown in Table 1, the control parameter information sent by the sensing initiator to the sensing responder may include a compression field indicating whether to compress the sensing feedback information. However, compression for the CIR information and the target feature cannot be indicated based on the compression field. In the feedback in Manner 1, the CIR report IE sent by the sensing responder to the sensing initiator carries the compression field indicating whether to compress the sensing feedback information. However, compression for a part of fields in the CIR information cannot be indicated based on the compression field. In the feedback in Manner 2, compression cannot be indicated based on the processed target feature IE sent by the sensing responder to the sensing initiator.

For the foregoing technical problem, in embodiments of this application, it is expected that the compression for the sensing feedback information is indicated according to the agreement in a protocol or based on indication information, so that compression for a part or all of fields in the sensing feedback information can be implemented.

The following describes the sensing measurement method provided in embodiments of this application with reference to the accompanying drawings.

It should be understood that, merely for ease of understanding and description, the following uses interaction between a first communication apparatus and a second communication apparatus as an example to describe in detail the method provided in embodiments of this application. The first communication apparatus may be a sensing initiator, and the second communication apparatus may be a sensing responder. The first communication apparatus may be the FFD or the RFD in (A) in FIG. 1, and the second communication apparatus may be the FFD or the RFD in (A) in FIG. 1; or the first communication apparatus may be the FFD or the RFD in (B) in FIG. 1, and the second communication apparatus may be the FFD or the RFD in (B) in FIG. 1.

However, it should be understood that this shall not constitute any limitation on an execution body of the method provided in this application. Any device may serve as the execution entity of the method provided in embodiments of this application provided that a program that records code of the method provided in embodiments of this application can be run according to the method provided in embodiments of this application. For example, both the first communication apparatus and the second communication apparatus in the following may be implemented as a device, a chip in a device, a chip system, or another functional module that can invoke a program and execute the program.

It should be noted that, the terms "first", "second", and various numbers in the following embodiments are only used for differentiation for ease of description, but are not used to limit the scope of embodiments of this application. For example, different communication apparatuses, different compression indication information, and different fields are distinguished.

FIG. 2 is a schematic interaction flowchart of a sensing measurement method 200 according to an embodiment of this application. As shown in FIG. 2, the method 200 may include a part or all of the following steps.

S210: A second communication apparatus generates first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information.

S220: The second communication apparatus sends the first compression indication information to a first communication apparatus. Correspondingly, the first communication apparatus receives the first compression indication information from the second communication apparatus.

S230: The second communication apparatus sends the sensing feedback information to the first communication apparatus. Correspondingly, the first communication apparatus receives the sensing feedback information from the second communication apparatus.

For example, the first compression indication information may indicate, by using one bit, to compress or not to compress the sensing feedback information. For example, when the bit is 1, it indicates to compress the sensing feedback information; or when the bit is 0, it indicates not to compress the sensing feedback information. Certainly, this is not limited in this application. For example, when the bit is 0, it indicates to compress the sensing feedback information; or when the bit is 1, it indicates not to compress the sensing feedback information.

Optionally, the first compression indication information may be carried in a first frame, and the first frame carries the first compression indication information and/or the sensing feedback information.

Optionally, the first compression indication information may be carried in the sensing feedback information, or the first compression indication information may be independent of the sensing feedback information. This is not limited in this application. When the sensing feedback information carries the first compression indication information, for a format of the feedback information, refer to Table 5 or Table 6.

Based on the feedback in Manner 1, a compression field in a CIR report IE shown in Table 5 may indicate whether to compress the sensing feedback information.

Table 5

| bits: 0 and 1 | 2 and 3 | 4 to 13 | 14 and 15 | 16 | 17 to 23 | octets: 4/8/16/32 | variable$\times$ N |
|---|---|---|---|---|---|---|---|
| number of rx antennas | bitmap length | bitmap offset | number of segments | compression | reserved | CIR bitmap | receive report(s) |

Compression: when a value is 1, indicates to compress the sensing feedback information; or when a value is 0, indicates not to compress the sensing feedback information. Certainly, this is not limited in this application. For example, when the value is 0, it indicates to compress the sensing feedback information; or when the value is 1, it indicates not to compress the sensing feedback information.

Meanings of other fields in Table 5 have been described in the foregoing example. For brevity, details are not described again.

Based on the feedback in Manner 2, a compression field in a processed target feature IE may indicate whether to compress the sensing feedback information, as shown in Table 6.

Table 6

| bits: 0 to 5 | 6 | 7 to 12 | 13 to 18 | 19 | 20 to 23 | 0/Variable | 0/Variable | 0/variable |
|---|---|---|---|---|---|---|---|---|
| number of targets | EOL | number of full targets | number of sparse targets | compression | reserved | CIR report | full target list | sparse target list |

Compression: when a value is 1, indicates to compress the sensing feedback information; or when a value is 0, indicates not to compress the sensing feedback information. Certainly, this is not limited in this application. For example, when the value is 0, it indicates to compress the sensing feedback information; or when the value is 1, it indicates not to compress the sensing feedback information.

Meanings of other fields in Table 6 have been described in the foregoing example. For brevity, details are not described again.

The second communication apparatus sends the first compression indication information to the first communication apparatus, to synchronize compression of the sensing feedback information. The second communication apparatus may send the sensing feedback information based on the first compression indication information. In an implementation, when the first compression indication information indicates to compress the sensing feedback information, the second communication apparatus may compress the sensing feedback information based on the content that needs to be compressed in the sensing feedback information and that is agreed on in the protocol, and send the sensing feedback information to the first communication apparatus. In another implementation, when the first compression indication information indicates not to compress the sensing feedback information, the second communication apparatus sends uncompressed sensing feedback information to the first communication apparatus.

The first communication apparatus may process the sensing feedback information based on the first compression indication information. Corresponding to the foregoing first implementation, the first communication apparatus may decompress, when the first compression indication information indicates to compress the sensing feedback information, the sensing feedback information based on the content that needs to be compressed in the sensing feedback information and that is agreed on in the protocol, to receive the sensing feedback information; or decompress, after receiving the sensing feedback information, the sensing feedback information based on the content that needs to be compressed in the sensing feedback information and that is agreed on in the protocol. Corresponding to the foregoing second implementation, when the first compression indication information indicates not to compress the sensing feedback information, the first communication apparatus directly receives the sensing feedback information without receiving the sensing feedback information through decompression.

For example, the sensing feedback information may include a CIR report IE and/or a processed target feature IE.

The following describes, by using an example, the content that needs to be compressed in the sensing feedback information and that is agreed on in the protocol.

In some examples, the protocol specifies that all of the sensing feedback information is to be compressed. For example, when the sensing feedback information includes the CIR report IE, all CIR report IE content is to be compressed; when the sensing feedback information includes the processed target feature IE, all processed target feature IE content is to be compressed; or when the sensing feedback information includes the CIR report IE and the processed target feature IE, all CIR report IE content and all processed target feature IE content are to be compressed.

In some other examples, the protocol specifies that the part of the sensing feedback information is to be compressed. For example, when the sensing feedback information includes the CIR report IE, that the protocol specifies that the part of the sensing feedback information is to be compressed may include: compressing a receive report(s) field in the CIR report IE, or compressing a CIR taps field in a receive report(s) field in the CIR report IE. For example, when the sensing feedback information includes the processed target feature IE, that the protocol specifies that the part of the sensing feedback information is to be compressed may include: compressing a full target list field and/or a sparse target list field in the processed target feature IE. For example, when the sensing feedback information includes the CIR report IE and the processed target feature IE, that the protocol specifies that the part of the sensing feedback information is to be compressed may include: compressing a receive report(s) field in the CIR report IE or compressing a CIR taps field in a receive report(s) field in the CIR report IE, and/or compressing a full target list field and/or a sparse target list field in the processed target feature IE.

In some embodiments, the protocol may specify a compression manner of the sensing feedback information. When the first compression indication information indicates to compress the sensing feedback information, the second communication apparatus may determine, according to the agreement in the protocol, content that needs to be compressed in the sensing feedback information, and compress, in the compression manner agreed on in the protocol, the content that needs to be compressed, so that the second communication apparatus sends the processed sensing feedback information to the first communication apparatus.

For example, for the CIR report IE in the sensing feedback information, when the protocol specifies that the receive report(s) field in the CIR report IE is to be compressed, a compression manner of the receive report(s) field may be agreed on in the protocol. The compression manner of the receive report(s) field may include the following several possible examples.

Manner 1.1: The protocol may specify that the receive report(s) field is to be compressed as a whole.

Manner 1.2: The protocol may specify that each receive report in the receive report(s) field is to be compressed.

Optionally, in Manner 1.1, compressed information obtained by compressing the receive report(s) field as a whole by the second communication apparatus corresponds to the receive report(s) field, and the compressed information may be sent via one or more data units after being encapsulated. The data unit may be a media access control protocol data unit (MAC protocol data unit, MPDU), or the data unit may be a data packet (packet), and the data packet may include one or more MPDUs.

Optionally, in Manner 1.2, the second communication apparatus compresses each receive report in the receive report(s) field to obtain compressed information corresponding to the receive report. Optionally, a plurality of pieces of compressed information corresponding to the receive report(s) field may be sent via one or more data units. Optionally, when the plurality of pieces of compressed information corresponding to the receive report(s) field are sent via the plurality of data units, each data unit includes one or more pieces of complete compressed information. In other words, one piece of compressed information is included in one data unit. Certainly, this is not limited in this application. For example, when a number of bits occupied by one piece of compressed information is greater than or equal to a maximum value of a payload (payload) in the data unit, the compressed information is included in at least two data units.

Manner 1.3: The protocol may specify that, when the CIR report IE is included in a plurality of data units, a receive report(s) field in each data unit is to be compressed as a whole. For example, the second communication apparatus may send the CIR report IE via five data units, and each data unit may include two receive reports. In this case, the second communication apparatus may compress the two receive reports corresponding to the data unit, to obtain compressed information corresponding to the data unit, and send, via each data unit, the compressed information corresponding to the data unit.

Optionally, in Manner 1.3, the compressed information sent via each data unit is obtained by compressing one or more complete receive reports. Certainly, this is not limited in this application. For example, if a bit occupied after one receive report is compressed is still greater than or equal to a maximum value of a payload (payload) in the data unit, the compressed information of the receive report may be included in at least two data units.

For example, for the processed target feature IE in the sensing feedback information, when the protocol specifies that the full target list field and/or the sparse target list field in the processed target feature IE are/is to be compressed, a compression manner of the full target list field and/or the sparse target list field may be agreed on in the protocol. The compression manner of the full target list field and/or the sparse target list field may include the following several possible examples.

Manner 2.1: The protocol may specify that the full target list field and the sparse target list field are to be compressed as a whole. It should be noted that the full target list field may include one or more full target lists, and the one or more full target lists may be a part or all of full target lists in the full target list field. The sparse target list field may include one or more sparse target lists, and the one or more sparse target lists may be a part or all of sparse target lists in the sparse target list field. The second communication apparatus may compress the one or more full target lists and the one or more sparse target lists in the processed target feature IE as a whole.

The second communication apparatus may encapsulate compressed information corresponding to the full target list field and compressed information corresponding to the sparse target list field, and send the encapsulated information via one or more data units.

Manner 2.2: The protocol may specify that the full target list field is to be compressed. In an example, that the protocol specifies that the full target list field is to be compressed may mean that the full target list field is to be compressed as a whole to obtain compressed information corresponding to the full target list field. For example, a plurality of full target lists in the full target list field are to be compressed as a whole. In another example, that the protocol specifies that the full target list field is to be compressed may mean that each full target list in the full target list field is to be compressed to obtain compressed information corresponding to the full target list.

The second communication apparatus may send, via one or more data units, a plurality of pieces of compressed information corresponding to the full target list field. Optionally, when the plurality of pieces of compressed information corresponding to the full target list field are sent via the plurality of data units, each data unit includes one or more pieces of complete compressed information. In other words, one piece of compressed information is included in one data unit. Certainly, this is not limited in this application. For example, when a bit occupied by one piece of compressed information is greater than or equal to a maximum value of a payload (payload) in the data unit, the compressed information is included in at least two data units.

Manner 2.3: The protocol may specify that the sparse target list field is to be compressed. An implementation in which the protocol specifies that the sparse target list field is to be compressed is similar to that in which the protocol specifies that the full target list field is to be compressed. For details, refer to the description in Manner 2.2. For brevity, details are not described again.

It should be noted that Manner 2.2 and Manner 2.3 may be combined with each other. For example, the protocol may specify that the full target list field is to be compressed, and specify that the sparse target list field is to be compressed. When 2.2 and 2.3 are combined with each other, the protocol may specify that, the full target list field is to be compressed as a whole and the sparse target list field is to be compressed as a whole; or the protocol may specify that, the full target list field is to be compressed as a whole and each sparse target list in the sparse target list field is to be compressed; or the protocol may specify that, each full target list in the full target list field is to be compressed and the sparse target list field is to be compressed as a whole; or the protocol may specify that, each full target list in the full target list field is to be compressed and each sparse target list in the sparse target list field is to be compressed.

Manner 2.4: The protocol may specify that, when the processed target feature IE is included in a plurality of data units, a full target list field and a sparse target list field in each data unit are to be compressed as a whole. For example, the second communication apparatus may send the processed target feature IE via five data units, and each data unit may include two full target lists and three sparse target lists. In this case, the second communication apparatus may compress the two full target lists and the three sparse target lists that correspond to each data unit, to obtain compressed information corresponding to the data unit, and send, via each data unit, compressed information corresponding to the data unit.

Optionally, in Manner 2.4, the compressed information sent via each data unit is obtained by compressing one or more complete full target list fields and one or more complete sparse target list fields. Certainly, this is not limited in this application. For example, if a bit occupied after one full target list is compressed is still greater than or equal to a maximum value of a payload (payload) in the data unit, the compressed information of the full target list may be included in at least two data units.

Manner 2.5: The protocol may specify that, when the processed target feature IE is included in a plurality of data units, a full target list field in each data unit is to be compressed as a whole, and each sparse target list field is to be compressed as a whole. For example, the second communication apparatus may send the processed target feature IE via five data units, and each data unit may include two full target lists and three sparse target lists. In this case, the second communication apparatus may compress the two full target lists corresponding to the data unit to obtain first compressed information corresponding to the data unit, compress the three sparse target lists in the data unit to obtain second compressed information corresponding to the data unit, and send, via each data unit, the first compressed information and the second compressed information that correspond to the data unit.

Optionally, in Manner 2.5, the first compressed information sent via each data unit is obtained by compressing one or more complete full target lists. Certainly, this is not limited in this application. For example, if a bit occupied after one full target list is compressed is still greater than or equal to a maximum value of a payload (payload) in the data unit, the first compressed information may be included in at least two data units. A transmission manner of the second compressed information is similar to that of the first compressed information. For brevity, details are not described again.

In some embodiments, when the first compression indication information indicates not to compress the sensing feedback information, the sensing feedback information is sent via one or more data units.

For example, when the sensing feedback information includes the CIR report IE, each data unit may carry one or more complete receive reports. This is not limited in this application. For example, if a bit occupied after one receive report is compressed is greater than or equal to a maximum value of a payload (payload) in the data unit, the receive report may be included in at least two data units.

For example, when the sensing feedback information includes the processed target feature IE, each data unit may carry one or more complete full target lists and/or one or more complete sparse target lists. This is not limited in this application. For example, if a bit occupied by one full target list is greater than or equal to a maximum value of a payload (payload) in the data unit, the full target list may be included in at least two data units.

It should be noted that, when the sensing feedback information includes the CIR report IE and the processed target feature IE, Manners 1.1 to 1.3 and Manners 2.1 to 2.5 may be combined with each other, to agree on the compression manner of the CIR report IE and the compression manner of the processed target feature IE.

Therefore, in this embodiment, the first communication apparatus and the second communication apparatus perform compression transmission on the sensing feedback information based on the compressed content agreed on in the protocol, for example, compressing the part of the sensing feedback information or compressing all of the sensing feedback information, to compress the part or all of the sensing feedback information.

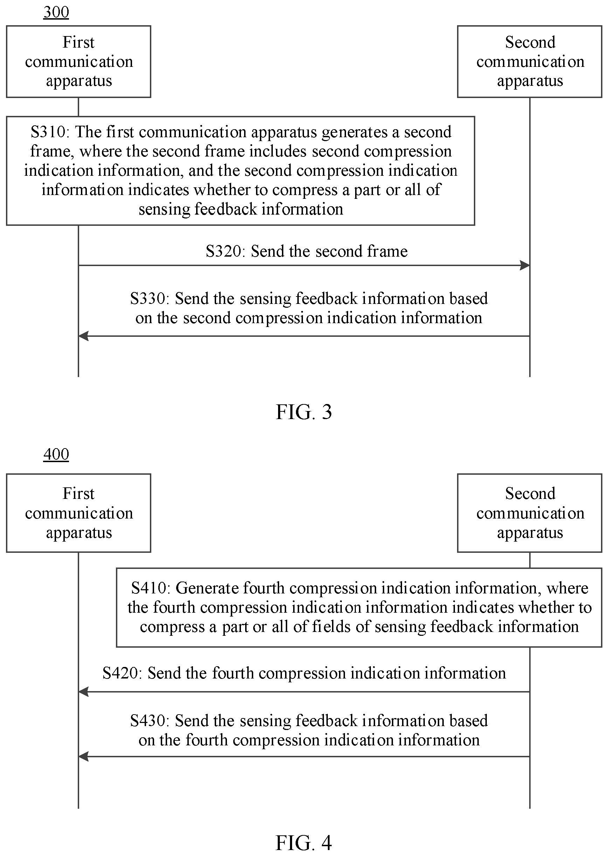

FIG. 3 is a schematic interaction flowchart of a sensing measurement method 300 according to an embodiment of this application. As shown in FIG. 3, the method 300 may include the following steps.

S310: A first communication apparatus generates a second frame, where the second frame includes second compression indication information, and the second compression indication information indicates whether to compress a part or all of sensing feedback information.

S320: The first communication apparatus sends the second frame to the second communication apparatus, and correspondingly, the second communication apparatus receives the second frame from the first communication apparatus.

S330: The second communication apparatus sends the sensing feedback information to the first communication apparatus based on the second compression indication information. Correspondingly, the first communication apparatus receives the sensing feedback information from the first communication apparatus.

For example, the sensing feedback information may include a CIR report IE and/or a processed target feature IE.

For example, the second compression indication information may indicate not to compress the sensing feedback information, compress all of the sensing feedback information, or compress the part of the sensing feedback information. For example, when the sensing feedback information includes the CIR report IE, the second compression indication information may indicate not to compress the CIR report IE, compress all of the CIR report IE, or compress a part of the CIR report IE. For another example, when the sensing feedback information includes the processed target feature IE, the second compression indication information may indicate not to compress the processed target feature IE, compress all of the processed target feature IE, or compress a part of the processed target feature IE. For still another example, when the sensing feedback information includes the CIR report IE and the processed target feature IE, the second compression indication information may indicate not to compress the CIR report IE and the processed target feature IE, compress all of the CIR report IE and/or all of the processed target feature IE, or compress a part of the CIR report IE and/or a part of the processed target feature IE.

When the second compression indication information indicates to compress the part of the sensing feedback information, the second compression indication information may indicate to compress a receive report(s) field in the CIR report IE, or indicate to compress a CIR taps field in a receive report(s) field in the CIR report IE. Optionally, the second compression indication information may indicate only to compress the part of the CIR report IE. When the second compression indication information indicates to compress the part of the CIR report IE, a protocol may specify that the receive report(s) field in the CIR report IE is to be compressed, or specify that the CIR taps field in the receive report(s) field in the CIR report IE is to be compressed.

When the second compression indication information indicates to compress the part of the sensing information, the second compression indication information may indicate to compress a full target list field and/or a sparse target list field in the processed target feature IE. Optionally, the second compression indication information may indicate only to compress the part of the processed target feature IE. When the second compression indication information indicates to compress the part of the processed target feature IE, the protocol may specify that the full target list field and/or the sparse target list field are/is to be compressed; or when the second compression indication information indicates to compress the part of the processed target feature IE, the full target list field and/or the sparse target list field in the processed target feature IE are/is compressed based on sensing feedback of a target of sensing measurement, where the sensing feedback includes full information feedback or sparse information feedback. For example, when the sensing feedback situation corresponding to the target is the full information feedback, the full target list field in the processed target feature IE is compressed; or when the sensing feedback situation corresponding to the target is the sparse information feedback, the sparse target list field in the processed target feature IE is compressed.

In some embodiments, the first communication apparatus may process the sensing feedback information based on compression indication information (for example, fourth compression indication information in the following) carried during sensing feedback. In other words, when the first communication apparatus sends the second compression indication information to the second communication apparatus, and the sensing feedback information sent by the second communication apparatus to the first communication apparatus carries the compression indication information (for example, the fourth compression indication information in the following), the sensing feedback information may be processed based on a compression indication of the second communication apparatus.

In some embodiments, the second frame includes third compression indication information, and the third compression indication information indicates a type of the sensing feedback information. For example, the type of the sensing feedback information includes a CIR and/or a target feature. In other words, the third compression indication information may indicate that the sensing feedback information includes the CIR report IE and/or the processed target feature IE, or the third compression indication information may indicate to compress the CIR report IE and/or the processed target feature IE in the sensing feedback information.

The second frame may include the second compression indication information, or the second frame includes the third compression indication information, or the second frame includes the third compression indication information and the second compression indication information. When the second frame includes the third compression indication information, the first communication apparatus may indicate, based on the third compression indication information, a type of sensing feedback information that needs to be fed back by the second communication apparatus. When the second frame includes the third compression indication information and the second compression indication information, the first communication apparatus may indicate, based on the third compression indication information, a type of sensing feedback information that needs to be fed back by the second communication apparatus, and indicate, based on the second compression indication information, a part or all of sensing information that needs to be compressed under the type of the sensing feedback information.

The following describes the third compression indication information and the second compression indication information in this embodiment by using an example with reference to a sensing measurement feedback control field shown in Table 7. The second compression indication information may include, for example, a compression control (compression control) field in Table 7, and the third compression indication information may include, for example, a feedback type (feedback type) field in Table 7.

Table 7

| bits: 0 | 1 and 2 | 3 | 4 to 7 | variable |
|---|---|---|---|---|
| feedback type | compression control | report mode | reserved | feedback parameters |

Feedback type: In a first example, when a value is 0, it may indicate that a type of the compressed sensing feedback information is a CIR; or when a value is 1, it may indicate that a type of the compressed sensing feedback information is a target feature. In a second example, when a value is 00, it may indicate that a type of the compressed sensing feedback information is a CIR; when a value is 01, it may indicate that a type of the compressed sensing feedback information is a target feature; or when a value is 10, it may indicate that a type of the compressed sensing feedback information is a CIR and a target feature.

Compression control:

In the first example of the feedback type, if the value of the feedback type is 0, a value of the compression control is 00, indicating not to compress the CIR report IE, a value of the compression control is 01, indicating to compress all of the CIR report IE, a value of the compression control is 10, indicating to compress the receive report(s) field in the CIR report IE, or a value of the compression control is 11, indicating to compress the CIR taps field in the receive report(s) field in the CIR report IE.

In the first example of the feedback type, if the value of the feedback type is 1, a value of the compression control is 00, indicating not to compress the processed target feature IE, a value of the compression control is 01, indicating to compress all of the processed target feature IE, a value of the compression control is 10, indicating to compress the full target list field and/or the sparse target list field in the processed target feature IE, or a value of the compression control is 11, indicating reserved.

In the second example of the feedback type, if the value of the feedback type is 00, for an indication manner of the compression control, refer to the indication manner of the compression control when the value of the feedback type is 0.

In the second example of the feedback type, if the value of the feedback type is 01, for an indication manner of the compression control, refer to the indication manner of the compression control when the value of the feedback type is 1.

In the second example of the feedback type, if the value of feedback type is 10, a value of the compression control is 00, indicating not to compress the CIR report IE and the processed target feature IE, a value of the compression control is 01, indicating to compress all of the CIR report IE and/or all of the processed target feature IE, a value of the compression control is 10, indicating to compress the receive report(s) field in the CIR report IE and/or the full target list field and/or the sparse target list field in the processed target feature IE, a value of the compression control is 11, indicating to compress the CIR taps field in the receive report(s) field in the CIR report IE, a value of the compression control is 00, indicating not to compress the CIR report IE and the processed target feature IE, a value of the compression control is 01, indicating to compress all of the CIR report IE and all of the processed target feature IE, a value of the compression control is 10, indicating to compress a part of the CIR report IE and all of the processed target feature IE, or a value of the compression control is 11, indicating to compress all of the CIR report IE and a part of the processed target feature IE.

Report mode (report mode): when a value is 1, indicates to feed back a sensing measurement result via out-of-band (out of band, OOB); or when a value is 0, indicates to feed back a sensing measurement result based on a UWB.

The feedback parameters (feedback parameters) may include:

In the first example of the feedback type, when a value of the feedback type is 0, the feedback parameters include at least one of the following:

a CIR I/Q number of bits field;
a bitmap mode field;
a length field;
a bitmap offset field;
a bitmap gap field;
a reference (reference) tap field;
a threshold (threshold) field, where when the bitmap mode is 1, it indicates a feedback threshold of the second communication apparatus, and feedback is performed only when an amplitude of the tap exceeds the threshold; and
a bitmap field.

In the first example of the feedback type, when a value of the feedback type is 1, the feedback parameters include at least one of the following:

a confidence level (confidence level) field: indicates whether to feed back a confidence level of a measurement result;
process CIR report for range: indicates whether to feed back range information, where when a value is 1, it indicates feedback; or when a value is 0, it indicates no feedback;
process CIR report for velocity: indicates whether to feed back velocity information, where when a value is 1, it indicates feedback; or when a value is 0, it indicates no feedback;
process CIR report for AOA measurement: indicates whether to feed back AOA information, where 1 indicates feedback; or 0 indicates no feedback; and
RSSI: indicates whether to feed back the RSSI.

In the second example of the feedback type, when a value of the feedback type is 00, for parameters included in the feedback parameters, refer to the parameters included in the feedback parameters when a value of the feedback type is 0 in the first example of the feedback type.

In the second example of the feedback type, when a value of the feedback type is 01, for parameters included in the feedback parameters, refer to the parameters included in the feedback parameters when a value of the feedback type is 1 in the first example of the feedback type.

In the second example of the feedback type, when a value of the feedback type is 10, parameters included in the feedback parameters may be: in the first example of the feedback type, a set of the parameters included in the feedback parameters when a value of the feedback type is 0 and the parameters included in the feedback parameters when a value of the feedback type is 1.

It should be noted that, for descriptions of a part of the feedback parameters, refer to the foregoing examples. For brevity, details are not described again.

It should be understood that the value of the field in the foregoing fields is not limited in this application. For example, when the value of the feedback type is 1, it may indicate that the type of the compressed sensing feedback information is the CIR; or when the value of the feedback type is 0, it may indicate that the type of the compressed sensing feedback information is the target feature.

The second communication apparatus may send the sensing feedback information based on the second compression indication information. For example, when the second compression indication information indicates to compress the part or all of the sensing feedback information, the second communication apparatus may compress the sensing feedback information based on the second compression indication information, and send the sensing feedback information to the first communication apparatus. When the second compression indication information indicates not to compress the sensing feedback information, the second communication apparatus may send uncompressed sensing feedback information to the first communication apparatus.

The first communication apparatus may process the sensing feedback information based on the second compression indication information. For example, the first communication apparatus may decompress the sensing feedback information based on the second compression indication information when the second compression indication information indicates to compress the sensing feedback information, to receive the sensing feedback information; or decompress the sensing feedback information based on the second compression indication information after receiving the sensing feedback information. When the second compression indication information indicates not to compress the sensing feedback information, the first communication apparatus directly receives the sensing feedback information without decompressing the sensing feedback information.

Optionally, when the second frame includes the third compression indication information, the second communication apparatus may send the sensing feedback information based on the third compression indication information and the second compression indication information, and the first communication apparatus may process the sensing feedback information based on the third compression indication information and the second compression indication information.

In some embodiments, the protocol may specify a compression manner of the sensing feedback information. When the second compression indication information indicates to compress the part of the sensing feedback information, the second communication apparatus may compress, in the compression manner agreed on in the protocol, content that needs to be compressed in the sensing feedback information, so that the second communication apparatus sends the processed sensing feedback information to the first communication apparatus.

A related example of the compression manner of the sensing feedback information agreed on in the protocol is described above. For example, when the sensing feedback information includes the CIR report IE, refer to the compression manner shown in the manners 1.1 to 1.3; or when the sensing feedback information includes the processed target feature IE, refer to the compression manner shown in the manners 2.1 to 2.5. For brevity, details are not described again.

Therefore, in this embodiment, the first communication apparatus sends the second compression indication information to the second communication apparatus, and the part or all of the sensing feedback information is compressed between the first communication apparatus and the second communication apparatus based on an indication of the second compression indication information, so that the first communication apparatus implements compression control on the sensing feedback of the second communication apparatus.

FIG. 4 is a schematic interaction flowchart of a sensing measurement method 400 according to an embodiment of this application. As shown in FIG. 4, the method 400 may include the following steps.

S410: A second communication apparatus generates fourth compression indication information, where the fourth compression indication information indicates whether to compress a part or all of fields in sensing feedback information.

S420: The second communication apparatus sends the fourth compression indication information to a first communication apparatus, and correspondingly, the first communication apparatus receives the fourth compression indication information sent by the second communication apparatus.

S430: The second communication apparatus sends the sensing feedback information to the first communication apparatus based on the fourth compression indication information, and correspondingly, the first communication apparatus receives the sensing feedback information from the first communication apparatus.

For example, the sensing feedback information may include a CIR report IE and/or a processed target feature IE.

Optionally, the fourth compression indication information may be carried in a third frame.

The fourth compression indication information may include the following several examples:

Example 1: The fourth compression indication information may indicate not to compress the sensing feedback information, compress all of the sensing feedback information, or compress the part of the sensing feedback information. For example, when the sensing feedback information includes the CIR report IE, the fourth compression indication information may indicate not to compress the CIR report IE, compress all of the CIR report IE, or compress a part of the CIR report IE. For another example, when the sensing feedback information includes the processed target feature IE, the fourth compression indication information may indicate not to compress the processed target feature IE, compress all of the processed target feature IE, or compress a part of the processed target feature IE. For still another example, when the sensing feedback information includes the CIR report IE and the processed target feature IE, the fourth compression indication information may indicate not to compress the CIR report IE and the processed target feature IE, compress all of the CIR report IE and/or all of the processed target feature IE, or compress a part of the CIR report IE and/or a part of the processed target feature IE.

The fourth compression indication information in this embodiment is described below as an example with reference to a format of a CIR report IE shown in Table 8. The fourth compression indication information may include, for example, a compression control field in Table 8.

Table 8

| bits: 0 to 7 | 8 to 14 | 15 | 17 and 18 | 19 to 23 | octets: variable |
|---|---|---|---|---|---|
| length | sub-ID | type | compression | reserved | CIR report IE content |

The length, the sub-ID, and the type (type) are a CIR report IE header, and other fields are the CIR report IE content.

Length: indicates a length of the CIR report IE content.

Sub-ID: indicates an identifier of the CIR report IE (for example, an IE number).

Type: indicates a type of the CIR report IE, for example, a long (long) type and a short (short) type.

Compression control: when a value is 00, indicates not to compress the CIR report IE; when a value is 01, indicates to compress all of the CIR report IE; when a value is 10, indicates to compress a receive report(s) field in the CIR report IE; or when a value is 11, indicates to compress a CIR taps field in a receive report(s) field in the CIR report IE.

Compressed content (compressed content): corresponds to the CIR report IE content in Table 2. It should be understood that the CIR report IE content in Table 2 may further include the receive report shown in Table 3.

It should be understood that the value of the field in the foregoing fields is not limited in this application. For example, when the value of the compression control is 11, it may indicate that not to compress the CIR report IE; or when the value is 10, it indicates to compress all of the CIR report IE.

The fourth compression indication information in this embodiment is described below as an example with reference to a format of a processed target feature IE shown in Table 9. The fourth compression indication information may include, for example, a compression control field in Table 9.

Table 9

| bits: 0 to 7 | 8 to 14 | 15 | 17 and 18 | 19 to 23 | octets: variable |
|---|---|---|---|---|---|
| length | sub-ID | type | compression | reserved | processed target feature IE content |

Compression control: when a value is 00, indicates not to compress the processed target feature IE; when a value is 01, indicates to compress all of the processed target feature IE; when a value is 10, indicates to compress a full target list field and/or a sparse target list field in the processed target feature IE; or when a value is 11, indicating reserved.

Compressed content: corresponds to the processed target feature IE content in Table 4.

The length, the sub-ID, and the type are similar to the corresponding fields in Table 8. For brevity, details are not described again.

Example 2: The fourth compression indication information may be implemented as a bitmap, to indicate to compress the part of the sensing feedback information. For example, when the sensing feedback information includes the CIR report IE, the fourth compression indication information may include a first bitmap, where at least one bit in the first bitmap one-to-one corresponds to at least one receive report in the receive report(s) field in the CIR report IE. Any bit indicates whether to compress a corresponding receive report or indicates whether to compress a CIR taps field in a corresponding receive report, to implement multi-level compression control on the CIR report IE.

The following describes the first bitmap as an example with reference to a CIR report IE content shown in Table 10. The first bitmap may be, for example, a compression bitmap (compression bitmap) field in Table 10.

Table 10

| bits: 0 and 1 | 2 and 3 | 4 to 13 | 14 and 15 | variable | Octets: 4/8/16/32 | variable |
|---|---|---|---|---|---|---|
| number of rx antennas | bitmap length | bitmap offset | number of segments | compression bit-map | CIR bitmap | receive re-port(s) |

Each bit in the compression bitmap corresponds to one receive report. When the bit is 1, it indicates to compress a receive report corresponding to the bit or CIR taps in a receive report corresponding to the bit. When the bit is 0, it indicates not to compress a receive report corresponding to the bit.

A length of the compression bitmap is equal to the number of receive reports. The number of receive reports is equal to the number of antennas that need to be fed back multiplied by the number of segments that need to be fed back. Whether to compress the receive report or compress the CIR taps in the receive report may be pre-agreed on by the first communication apparatus and the second communication apparatus.

It should be noted that the value of the field in the foregoing fields is not limited in this application. For example, when the bit in the compression bitmap is 0, it indicates to compress the corresponding receive report or compress the CIR taps in the corresponding receive report; or when the bit is 1, it indicates not to compress the receive report corresponding to the bit.

For another example, when the sensing feedback information includes the processed target feature IE, the fourth compression indication information may include a second bitmap, where at least one bit in the second bitmap one-to-one corresponds to at least one piece of target feedback content in the processed target feature IE. Any bit indicates whether to compress corresponding target feedback content, and the target feedback content is carried in the full target list field and/or the sparse target list field. It should be noted that each target feedback content is used to feed back one target feature of sensing measurement.

The following describes the second bitmap as an example with reference to processed target feature IE content shown in Table 11. The second bitmap may be, for example, a compression bitmap field in Table 11.

Table 11

| bits: 0 to 5 | 6 | 7 to 12 | 13 to 18 | variable | 0/Variable | 0/variable |
|---|---|---|---|---|---|---|
| number of targets | EOL | number of full targets | number of sparse targets | compression bitmap | full target list | sparse target list |

Each bit in the compression bitmap corresponds to one target of sensing measurement. When the bit is 1, it indicates to compress feedback content of the target corresponding to the bit; or when the bit is 0, it indicates not to compress feedback content of the target corresponding to the bit.

A length of the compression bitmap is equal to $8 * \left\lceil \frac{number\ of\ targets}{8} \right\rceil$. If the foregoing value exceeds the number of targets (number of targets), zero padding is performed. The number of targets may be a sum of the number of full targets and the number of sparse targets.

For example, for the number of full targets, refer to the following Table 12.

Table 12

| bits: 8 | 0/16 | 0/6 | 0/11 | 0/5 | 0/10 | 0/5 | 0/12 | 0/12 | 0/12 | 8 |
|---|---|---|---|---|---|---|---|---|---|---|
| target ID | range | range span | azimuth | azimuth span | elevation | elevation span | radial velocity | azimuth velocity | elevation velocity | RSSI |

Target identifier (target ID): indicates an identifier of a target, for example, a target sequence number.

Range (range): indicates a range between a target and a receiver of a sensing signal, where a unit is centimeter or millimeter.

Range span (range span): indicates a range unit that a target crosses.

Azimuth (azimuth): indicates an azimuth of a target relative to a receiver of a sensing signal, where a unit is (360/2048) degrees.

Azimuth span (azimuth span): indicates an azimuth unit that a target crosses.

Elevation (elevation): indicates an elevation of a target relative to a receiver of a sensing signal, where a unit is (360/2048) degrees.

Elevation span (elevation span): indicates an elevation unit that a target crosses.

Radial velocity (radial velocity): indicates a radial velocity of a target relative to a receiver of a sensing signal, where a unit is 1 mm per second.

Azimuth velocity (azimuth velocity): indicates an azimuth velocity of a target relative to a receiver of a sensing signal, where a unit is (360/2048) degrees per second.

Elevation velocity (elevation velocity): indicates an elevation velocity of a target relative to a receiver of a sensing signal, where a unit is (360/2048) degrees per second.

RSSI: indicates received signal strength.

Content of the sparse target list is a subset of the full target list.

Example 3: When the sensing feedback information includes the CIR report IE, the fourth compression indication information may include an identifier (for example, the sub-ID in Table 8) of the CIR report IE in the sensing feedback information; or when the sensing feedback information includes the processed target feature IE, the fourth compression indication information may include an identifier (for example, the sub-ID in Table 9) of the processed target feature IE in the sensing feedback information.

Optionally, the identifier of the CIR report IE may be pre-agreed on by the first communication apparatus and the second communication apparatus. Similarly, the identifier of the processed target feature IE may be pre-agreed on by the first communication apparatus and the second communication apparatus.

For example, different CIR report IEs correspond to different sub-ID values. When the sub-ID is a first value, it indicates not to compress the CIR report IE; when the sub-ID is a second value, it indicates to compress all of the CIR report IE; when the sub-ID is a third value, it indicates to compress the receive reports field in the CIR report IE; or when the sub-ID is a fourth value, it indicates to compress the CIR taps field in the receive report(s) field in the CIR report IE.

For example, different processed target feature IEs correspond to different sub-ID values. When the sub-ID is a fifth value, it indicates not to compress the processed target feature IE; when the sub-ID is a sixth value, it indicates to compress all of the processed target feature IE; when the sub-ID is a seventh value, it indicates to compress the receive reports field in the CIR report IE; or when the sub-ID is a fourth value, it indicates to compress the full target list field and/or the sparse target list field in the processed target feature IE.

Example 4: The fourth compression indication information indicates whether to compress the CIR taps field in the receive report(s) field in the CIR report IE in the sensing feedback information, and the fourth compression indication information is carried in the CIR taps field in the receive report(s) field in the CIR report IE.

The fourth compression indication information in this embodiment is described below as an example with reference to a receive report shown in Table 13. The fourth compression indication information may include, for example, a compression field in Table 13.

Table 13

| Bits: 0 to 5 | 6 to 9 | 10 | 11 to 15 | Octets: 1 | Variable |
|---|---|---|---|---|---|
| timing offset | normalization factor | compression | reserved | RSSI | CIR taps |

Compression: when a value is 0, indicates not to compress the CIR report IE; or when a value is 1, indicates to compress the CIR Taps.

It should be noted that, for a field that is not described in the receive report, refer to the foregoing example. For brevity, details are not described again.

It should be understood that the value of the field in the foregoing fields is not limited in this application. For example, compression: when the value is 1, indicates not to compress the CIR report IE; or when the value is 0, indicates to compress the CIR Taps.

The second communication apparatus may send the sensing feedback information based on the fourth compression indication information. For example, when the fourth compression indication information indicates to compress the part or all of the sensing feedback information, the second communication apparatus may compress the sensing feedback information based on the fourth compression indication information, and send the sensing feedback information to the first communication apparatus. When the fourth compression indication information indicates not to compress the sensing feedback information, the second communication apparatus may send uncompressed sensing feedback information to the first communication apparatus.

The first communication apparatus may process the sensing feedback information based on the fourth compression indication information. For example, the first communication apparatus may decompress the sensing feedback information based on the fourth compression indication information when the fourth compression indication information indicates to compress the sensing feedback information, to receive the sensing feedback information; or decompress the sensing feedback information based on the fourth compression indication information after receiving the sensing feedback information. When the fourth compression indication information indicates not to compress the sensing feedback information, the first communication apparatus directly receives the sensing feedback information without decompressing the sensing feedback information.

Therefore, in this embodiment, the second communication apparatus sends the fourth compression indication information to the first communication apparatus, and the part or all of the sensing feedback information is compressed between the first communication apparatus and the second communication apparatus based on an indication of the fourth compression indication information, so that compression transmission of the sensing feedback is implemented between the first communication apparatus and the second communication apparatus.

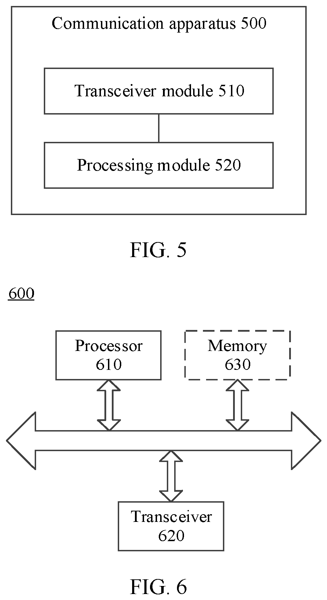

FIG. 5 is a block diagram of a communication apparatus according to an embodiment of this application. In a possible implementation, a communication apparatus 500 may include modules or units that one-to-one correspond to the methods/operations/steps/actions performed by the first communication apparatus or the second communication apparatus in the foregoing method embodiments, and the units may be implemented by a hardware circuit, software, or a combination of a hardware circuit and software. In a possible implementation, as shown in FIG. 5, the apparatus 500 may include a transceiver module 510 and a processing module 520.

Optionally, the communication apparatus 500 may correspond to the first communication apparatus in the foregoing method embodiments.

The communication apparatus 500 may be configured to perform the method on the first communication apparatus side in any one of the method embodiments shown in FIG. 2 to FIG. 4.

When the communication apparatus 500 is configured to perform the method embodiment shown in FIG. 2, the transceiver module 510 may be configured to receive first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information; and the processing module 520 may be configured to process the sensing feedback information based on the first compression indication information.

When the communication apparatus 500 is configured to perform the method embodiment shown in FIG. 3, the processing module 520 may be configured to generate a second frame, where the second frame includes second compression indication information, and the second compression indication information indicates whether to compress a part or all of sensing feedback information; and the transceiver module 510 may be configured to send the second frame.

When the communication apparatus 500 is configured to perform the method embodiment shown in FIG. 4, the transceiver module 510 may be configured to receive fourth compression indication information, where the fourth compression indication information indicates whether to compress a part or all of fields in sensing feedback information; and the processing module 520 may be configured to process the sensing feedback information based on the fourth compression indication information.

It should be understood that specific processes performed by the modules are described in detail in the foregoing method embodiments. For brevity, details are not described herein again.

Optionally, the communication apparatus 500 may correspond to the second communication apparatus in the foregoing method embodiments.

The communication apparatus 500 may be configured to perform the method on the second communication apparatus side in any one of the method embodiments shown in FIG. 2 to FIG. 4.

When the communication apparatus 500 is configured to perform the method embodiment shown in FIG. 2, the processing module 520 may be configured to generate first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information; and the transceiver module 510 may be configured to send the first compression indication information.

When the communication apparatus 500 is configured to perform the method embodiment shown in FIG. 3, the transceiver module 510 may be configured to receive a second frame, where the second frame includes second compression indication information, and the second compression indication information indicates whether to compress a part or all of sensing feedback information; and the processing module 520 may be configured to process the sensing feedback information based on the second compression indication information.

When the communication apparatus 500 is configured to perform the method embodiment shown in FIG. 4, the processing module 520 may be configured to generate fourth compression indication information, where the fourth compression indication information indicates whether to compress a part or all of fields in sensing feedback information; and the transceiver module 510 may be configured to send the fourth compression indication information.

It should be understood that specific processes performed by the modules are described in detail in the foregoing method embodiments. For brevity, details are not described herein again.

The transceiver module 510 in the communication apparatus 500 may be implemented via a transceiver, for example, may correspond to a transceiver 620 in a communication apparatus 600 shown in FIG. 6. The processing module 520 in the communication apparatus 500 may be implemented via at least one processor, for example, may correspond to a processor 610 in the communication apparatus 600 shown in FIG. 6.

When the communication apparatus 500 is a chip or a chip system configured in a communication device, the transceiver module 510 in the communication apparatus 500 may be implemented by using an input/output interface, a circuit, or the like, and the processing module 520 in the communication apparatus 500 may be implemented by using a processor, a microprocessor, an integrated circuit, or the like integrated on the chip or the chip system.

FIG. 6 is another block diagram of a communication apparatus according to an embodiment of this application. As shown in FIG. 6, a communication apparatus 600 may include a processor 610. The processor 610 may be configured to perform the method performed by the first communication apparatus or the second communication apparatus in the foregoing method embodiments.

In some possible implementations, the communication apparatus 600 may include a transceiver 620. The transceiver 620 and the processor 610 may communicate with each other through an internal connection path. The processor 610 may control the transceiver 620 to send a signal and/or receive a signal.

In some possible implementations, the communication apparatus 600 may include a memory 630. The memory 630 and the processor 610 may communicate with each other through an internal connection path. The memory 630 and the processor 610 may be integrated together, or disposed separately. The memory 630 may alternatively be a memory outside the apparatus. The memory 630 is configured to store instructions, and the processor 610 is configured to execute the instructions stored in the memory 630, to perform the method in the foregoing method embodiments.

It should be understood that the communication apparatus 600 may be configured to perform the steps and/or procedures performed by the first communication apparatus or the second communication apparatus in the foregoing method embodiments. Optionally, the memory 630 may include a read-only memory and a random access memory, and provide instructions and data for the processor. A part of the memory may further include a non-volatile random access memory. The memory 630 may be a separate component, or may be integrated into the processor 610. The processor 610 may be configured to execute the instructions stored in the memory 630. When the processor 610 executes the instructions stored in the memory, the processor 610 is configured to perform the steps and/or procedures corresponding to the foregoing method embodiments.

Optionally, the communication apparatus 600 is the first communication apparatus in the foregoing embodiments.

Optionally, the communication apparatus 600 is the second communication apparatus in the foregoing embodiments.

The transceiver 620 may include a transmitter and a receiver. The transceiver 620 may further include an antenna, and there may be one or more antennas. The processor 610, the memory 630, and the transceiver 620 may be components integrated on different chips. For example, the processor 610 and the memory 630 may be integrated into a baseband chip, and the transceiver 620 may be integrated into a radio frequency chip. Alternatively, the processor 610, the memory 630, and the transceiver 620 may be components integrated on a same chip. This is not limited in this application.

The transceiver 620 may alternatively be a communication interface, for example, an input/output interface or a circuit. The transceiver 620, the processor 610, and the memory 630 may be integrated into a same chip, for example, integrated into the baseband chip.

This application further provides a processing apparatus, including at least one processor. The at least one processor enables, by running a computer program or by using a logic circuit, the processing apparatus to perform the method performed by the first communication apparatus or the second communication apparatus in the foregoing method embodiments. The processing apparatus may further include a memory, and the memory is configured to store the computer program.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program to enable the processing apparatus to perform the method performed by the first communication apparatus or the second communication apparatus in the foregoing method embodiments.

An embodiment of this application further provides a processing apparatus, including a processor and a memory. The memory is configured to store a computer program. The processor is configured to invoke the computer program from the memory and run the computer program, so that the processing apparatus performs the method performed by the first communication apparatus or the second communication apparatus in the foregoing method embodiments.

It should be understood that the processing apparatus may be one or more chips. For example, the processing apparatus may be a field programmable gate array (field programmable gate array, FPGA), an application-specific integrated chip (application-specific integrated circuit, ASIC), a system on chip (system on chip, SoC), a central processing unit (central processing unit, CPU), a network processor (network processor, NP), a digital signal processing circuit (digital signal processor, DSP), a microcontroller (micro controller unit, MCU), a programmable controller (programmable logic device, PLD), or another integrated chip.

In an implementation process, steps in the foregoing methods can be implemented by using a hardware integrated logic circuit in the processor, or by using instructions in a form of software. The steps of the method disclosed with reference to embodiments of this application may be directly performed by a hardware processor, or may be performed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

According to the method provided in embodiments of this application, this application further provides a computer program product. The computer program product includes a computer program or a group of instructions. When the computer program or the group of instructions are run on a computer, the computer is enabled to perform the method performed by the first communication apparatus or the second communication apparatus in the foregoing method embodiments.

According to the method provided in embodiments of this application, this application further provides a computer-readable storage medium. The computer-readable storage medium stores a program. When the program is run on a computer, the computer is enabled to perform the method performed by the first communication apparatus or the second communication apparatus in the foregoing method embodiments.

According to the method provided in embodiments of this application, this application further provides a communication system. The communication system may include the foregoing first communication apparatus or second communication apparatus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

**Claims**

1. A sensing measurement method, comprising:

   generating first compression indication information, wherein the first compression indication information indicates whether to compress sensing feedback information, content that needs to be compressed in the sensing feedback information is agreed on in a protocol, and the content that needs to be compressed in the sensing feedback information comprises all or a part of the sensing feedback information; and
   sending the first compression indication information.

2. The method according to claim 1, wherein the sensing feedback information comprises a channel impulse response report information element CIR report IE, and the part of the sensing feedback information comprises:

a receive report(s) (receive report(s)) field in the CIR report IE; or
a CIR taps (taps) field in a receive report(s) field in the CIR report IE.

3. The method according to claim 2, wherein when the part of the sensing feedback information comprises the receive report(s) (receive report(s)) field in the CIR report IE, a compression manner of the receive report(s) field is agreed on in the protocol.

4. The method according to claim 3, wherein the compression manner of the receive report(s) field comprises:

   compressing the receive report(s) field as a whole; or
   compressing each receive report in the receive report(s) field.

5. The method according to claim 3, wherein the CIR report IE is comprised in a plurality of data units, and the compression manner of the receive report(s) field comprises:
   compressing a receive report(s) field in each data unit as a whole.

6. The method according to claim 1, wherein the sensing feedback information comprises a processed target feature information element processed target feature IE, and the part of the sensing feedback information comprises:
   a full information target feedback content (full target list) field and/or a sparse information target feedback content (sparse target list) field in the processed target feature IE.

7. The method according to claim 6, wherein a compression manner of the full target list field and/or the sparse target list field is agreed on in the protocol.

8. The method according to claim 7, wherein the compression manner of the full target list field and/or the sparse target list field comprises:

   compressing the full target list field and the sparse target list field as a whole; or
   compressing the full target list field, and/or compressing the sparse target list field.

9. The method according to claim 8, wherein compressing the full target list field comprises:

   compressing the full target list field as a whole; or
   compressing each full target list in the full target list field.

10. The method according to claim 8 or 9, wherein compressing the sparse target list field comprises:

    compressing the sparse target list field as a whole; or
    compressing each sparse target list in the sparse target list field.

11. The method according to claim 7, wherein the processed target feature IE is comprised in a plurality of data units, and the compression manner of the full target list field and/or the sparse target list field comprises:

    compressing a full target list field and a sparse target list field in each data unit as a whole; or
    compressing a full target list field in each data unit as a whole, and compressing each sparse target list field as a whole.

12. A sensing measurement method, comprising:

    receiving first compression indication information, wherein the first compression indication information indicates whether to compress sensing feedback information, content that needs to be compressed in the sensing feedback information is agreed on in a protocol, and the content that needs to be compressed in the sensing feedback information comprises all or a part of the sensing feedback information; and
    processing the sensing feedback information based on the first compression indication information.

13. The method according to claim 12, wherein the sensing feedback information comprises a channel impulse response report information element CIR report IE, and the part of the sensing feedback information comprises:

a receive report(s) (receive report(s)) field in the CIR report IE; or
a CIR taps (taps) field in a receive report(s) field in the CIR report IE.

14. The method according to claim 13, wherein when the part of the sensing feedback information comprises the receive report(s) (receive report(s)) field in the CIR report IE, a compression manner of the receive report(s) field is agreed on in the protocol.

15. The method according to claim 14, wherein the compression manner of the receive report(s) field comprises:

    compressing the receive report(s) field as a whole; or
    compressing each receive report in the receive report(s) field.

16. The method according to claim 14, wherein the CIR report IE is comprised in a plurality of data units, and the compression manner of the receive report(s) field comprises:
    compressing a receive report(s) field in each data unit as a whole.

17. The method according to claim 12, wherein the sensing feedback information comprises a processed target feature information element processed target feature IE, and the part of the sensing feedback information comprises:
    a full information target feedback content (full target list) field and/or a sparse information target feedback content (sparse target list) field in the processed target feature IE.

18. The method according to claim 17, wherein a compression manner of the full target list field and/or the sparse target list field is agreed on in the protocol.

19. The method according to claim 18, wherein the compression manner of the full target list field and/or the sparse target list field comprises:

    compressing the full target list field and the sparse target list field as a whole; or
    compressing the full target list field, and/or compressing the sparse target list field.

20. The method according to claim 19, wherein compressing the full target list field comprises:

    compressing the full target list field as a whole; or
    compressing each full target list in the full target list field.

21. The method according to claim 19 or 20, wherein compressing the sparse target list field comprises:

    compressing the sparse target list field as a whole; or
    compressing each sparse target list in the sparse target list field.

22. The method according to claim 18, wherein the processed target feature IE is comprised in a plurality of data units, and the compression manner of the full target list field and/or the sparse target list field comprises:

    compressing a full target list field and a sparse target list field in each data unit as a whole; or
    compressing a full target list field in each data unit as a whole, and compressing each sparse target list field as a whole.

23. A sensing measurement method, comprising:

    generating a second frame, wherein the second frame comprises second compression indication information, and the second compression indication information indicates whether to compress a part or all of sensing feedback information; and
    sending the second frame.

24. The method according to claim 23, wherein the second frame further comprises third compression indication information, and the third compression indication information indicates a type of the sensing feedback information.

25. The method according to claim 24, wherein the type of the sensing feedback information is a channel impulse response CIR, and the sensing feedback information comprises a channel impulse response report information element CIR report IE;

compressing the part of the sensing feedback information comprises: compressing a receive report(s) field in the CIR report IE; or compressing a CIR taps field in a receive report(s) field in the CIR report IE; and compressing all of the sensing feedback information comprises: compressing the CIR report IE.

26. The method according to claim 25, wherein when the second compression indication information indicates to compress the receive report(s) field in the CIR report IE, a compression manner of the receive report(s) field is agreed on in a protocol.

27. The method according to claim 26, wherein the compression manner of the receive report(s) field comprises:

compressing the receive report(s) field as a whole; or compressing each receive report in the receive report(s) field.

28. The method according to claim 26, wherein the CIR report IE is comprised in a plurality of data units, and the compression manner of the receive report(s) field comprises: compressing a receive report(s) field in each data unit as a whole.

29. The method according to claim 24, wherein the type of the sensing feedback information is a target feature, and the sensing feedback information comprises a processed target feature IE; and compressing the part of the sensing feedback information comprises: compressing a full target list field and/or a sparse target list field in the processed target feature IE.

30. The method according to claim 29, wherein a compression manner of the full target list field and/or the sparse target list field is agreed on in the protocol.

31. The method according to claim 30, wherein the compression manner of the full target list field and/or the sparse target list field comprises:

compressing the full target list field and the sparse target list field as a whole; or compressing the full target list field, and/or compressing the sparse target list field.

32. The method according to claim 31, wherein compressing the full target list field comprises:

compressing the full target list field as a whole; or compressing each full target list in the full target list field.

33. The method according to claim 31 or 32, wherein compressing the sparse target list field comprises:

compressing the sparse target list field as a whole; or compressing each sparse target list in the sparse target list field.

34. The method according to claim 30, wherein the processed target feature IE is comprised in a plurality of data units, and the compression manner of the full target list field and/or the sparse target list field comprises:

compressing a full target list field and a sparse target list field in each data unit as a whole; or compressing a full target list field in each data unit as a whole, and compressing each sparse target list field as a whole.

35. A sensing measurement method, comprising:

receiving a second frame, wherein the second frame comprises second compression indication information, and the second compression indication information indicates whether to compress a part or all of sensing feedback information; and processing the sensing feedback information based on the second compression indication information.

36. The method according to claim 35, wherein the second frame further comprises third compression indication information, and the third compression indication information indicates a type of the sensing feedback information.

37. The method according to claim 36, wherein the type of the sensing feedback information is a channel impulse response CIR, and the sensing feedback information comprises a channel impulse response report information element CIR report IE;

    compressing the part of the sensing feedback information comprises: compressing a receive report(s) field in the CIR report IE; or compressing a CIR taps field in a receive report(s) field in the CIR report IE; and
    compressing all of the sensing feedback information comprises: compressing the CIR report IE.

38. The method according to claim 37, wherein when the second compression indication information indicates to compress the receive report(s) field in the CIR report IE, a compression manner of the receive report(s) field is agreed on in a protocol.

39. The method according to claim 38, wherein the compression manner of the receive report(s) field comprises:

    compressing the receive report(s) field as a whole; or
    compressing each receive report in the receive report(s) field.

40. The method according to claim 38, wherein the CIR report IE is comprised in a plurality of data units, and the compression manner of the receive report(s) field comprises:
    compressing a receive report(s) field in each data unit as a whole.

41. The method according to claim 36, wherein the type of the sensing feedback information is a target feature, and the sensing feedback information comprises a processed target feature IE; and
    compressing the part of the sensing feedback information comprises: compressing a full target list field and/or a sparse target list field in the processed target feature IE.

42. The method according to claim 41, wherein a compression manner of the full target list field and/or the sparse target list field is agreed on in the protocol.

43. The method according to claim 42, wherein the compression manner of the full target list field and/or the sparse target list field comprises:

    compressing the full target list field and the sparse target list field as a whole; or
    compressing the full target list field, and/or compressing the sparse target list field.

44. The method according to claim 43, wherein compressing the full target list field comprises:

    compressing the full target list field as a whole; or
    compressing each full target list in the full target list field.

45. The method according to claim 43 or 44, wherein compressing the sparse target list field comprises:

    compressing the sparse target list field as a whole; or
    compressing each sparse target list in the sparse target list field.

46. The method according to claim 42, wherein the processed target feature IE is comprised in a plurality of data units, and the compression manner of the full target list field and/or the sparse target list field comprises:

    compressing a full target list field and a sparse target list field in each data unit as a whole; or
    compressing a full target list field in each data unit as a whole, and compressing each sparse target list field as a whole.

47. A communication apparatus, comprising a module configured to perform the method according to any one of claims 1 to 46.

**48.** A communication apparatus, comprising a processor, wherein the processor is configured to perform the method according to any one of claims 1 to 46 by running a computer program or by using a logic circuit.

**49.** A computer-readable storage medium, configured to store computer program instructions, wherein the computer program enables a computer to perform the method according to any one of claims 1 to 46.

**50.** A computer program product, comprising computer program instructions, wherein the computer program instructions enable a computer to perform the method according to any one of claims 1 to 46.

101

102

PAN
coordinator

(A)

PAN
coordinator

(B)

FIG. 1

200

First
communication
apparatus

Second
communication
apparatus

S210: Generate first compression indication information, where the first compression indication information indicates whether to compress sensing feedback information, content that needs to be compressed in the sensing feedback information is agreed on in a protocol, and the content that needs to be compressed in the sensing feedback information includes all or a part of the sensing feedback information

S220: Send the first compression indication information

S230: Send the sensing feedback information based on the first compression indication information

FIG. 2

300

| First communication apparatus | | Second communication apparatus |
|---|---|---|

S310: The first communication apparatus generates a second frame, where the second frame includes second compression indication information, and the second compression indication information indicates whether to compress a part or all of sensing feedback information

S320: Send the second frame →

S330: Send the sensing feedback information based on the second compression indication information ←

FIG. 3

400

| First communication apparatus | | Second communication apparatus |
|---|---|---|

S410: Generate fourth compression indication information, where the fourth compression indication information indicates whether to compress a part or all of fields of sensing feedback information

S420: Send the fourth compression indication information ←

S430: Send the sensing feedback information based on the fourth compression indication information ←

FIG. 4

Communication apparatus 500

Transceiver module 510

Processing module 520

FIG. 5

600

Processor
610

Memory
630

Transceiver
620

FIG. 6

## INTERNATIONAL SEARCH REPORT

| | International application No. |
|---|---|
| | **PCT/CN2024/126325** |

| **A.** | **CLASSIFICATION OF SUBJECT MATTER** |
|---|---|

H04W4/02(2018.01)i

According to International Patent Classification (IPC) or to both national classification and IPC

| **B.** | **FIELDS SEARCHED** |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; CNKI; VEN; USTXT; WOTXT; EPTXT; 3GPP; IEEE: 感知, 测量, 压缩, 反馈, 指示, 信道冲击响应, 报告, 字段, sensing, measurement, compress, response, indicate, CIR, report, bitmap, full target list, sparse, feature

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 114363420 A (GUANGDONG OPPO MOBILE TELECOMMUNICATIONS CORP., LTD.) 15 April 2022 (2022-04-15)<br>description, paragraphs [0063]-[0169] and [0235]-[0255] | 1, 12, 23, 35, 47-50 |
| Y | CN 116758209 A (HUAWEI TECHNOLOGIES CO., LTD.) 15 September 2023 (2023-09-15)<br>description, paragraphs [0138]-[0158] | 1, 12, 23, 35, 47-50 |
| A | CN 110958646 A (HUAWEI TECHNOLOGIES CO., LTD.) 03 April 2020 (2020-04-03)<br>entire document | 1-50 |
| A | CN 107258102 A (INTEL IP CORP.) 17 October 2017 (2017-10-17)<br>entire document | 1-50 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **06 January 2025** | **08 January 2025** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/126325**

| Patent document cited in search report | | | Publication date (day/month/year) | Patent family member(s) | | | Publication date (day/month/year) |
|---|---|---|---|---|---|---|---|
| CN | 114363420 | A | 15 April 2022 | CN | 114363420 | B | 09 February 2024 |
| CN | 116758209 | A | 15 September 2023 | WO | 2023165316 | A1 | 07 September 2023 |
| CN | 110958646 | A | 03 April 2020 | CA | 3114450 | A1 | 02 April 2020 |
| | | | | CA | 3114450 | C | 26 September 2023 |
| | | | | JP | 2022501945 | A | 06 January 2022 |
| | | | | JP | 7327831 | B2 | 16 August 2023 |
| | | | | US | 2021219174 | A1 | 15 July 2021 |
| | | | | US | 11956667 | B2 | 09 April 2024 |
| | | | | EP | 3852433 | A1 | 21 July 2021 |
| | | | | EP | 3852433 | A4 | 24 November 2021 |
| | | | | EP | 3852433 | B1 | 21 February 2024 |
| | | | | KR | 20210064345 | A | 02 June 2021 |
| | | | | KR | 102598577 | B1 | 06 November 2023 |
| | | | | WO | 2020063318 | A1 | 02 April 2020 |
| CN | 107258102 | A | 17 October 2017 | EP | 3275240 | A1 | 31 January 2018 |
| | | | | EP | 3275240 | A4 | 07 November 2018 |
| | | | | EP | 3275240 | B1 | 05 August 2020 |
| | | | | WO | 2016159942 | A1 | 06 October 2016 |
| | | | | US | 2018054758 | A1 | 22 February 2018 |

Form PCT/ISA/210 (patent family annex) (July 2022)

**REFERENCES CITED IN THE DESCRIPTION**

**Patent documents cited in the description**

- CN 202311390334X

- CN 202410029547